# EUROPEAN PATENT APPLICATION

(11) **EP 4 668 771 A1**
(43) Date of publication of application: **24.12.2025**
(21) Application number: 25181711.0
(22) Date of filing: 10.06.2025
(51) Int. Cl.: H04N 25/532, H04N 25/589, H04N 25/616, H04N 25/618, H04N 25/771

(54) **IMAGING SYSTEM, IMAGING METHOD, AND STORAGE MEDIUM**

(30) Priority: 19.06.2024 JP 2024099054; 04.04.2025 JP 2025062711
(71) Applicant: CANON KABUSHIKI KAISHA, Tokyo 146-8501 (JP)
(72) Inventor: WATANABE, Kento, Tokyo, 146-8501 (JP)
(74) Representative: TBK

(57) **Abstract**

An imaging system includes a plurality of pixels, each pixel including: a photoelectric conversion unit; two or more charge holding units; a transfer unit for transferring the electric charge from the photoelectric conversion unit to the charge holding units; a charge discharge unit for discharging the electric charge in the photoelectric conversion unit; and a read unit for reading a signal, and further includes a control unit for performing batch drive control of simultaneously driving at least one of the transfer units and the charge discharge units for the plurality of pixels, and performing the photoelectric conversion during two or more different exposure periods in one frame period and controlling one of times for reading signals in accordance with electric charges accumulated in each exposure period not to overlap the timing for the batch drive control.

## Description

### TECHNICAL FIELD

The present disclosure relates to an imaging system, an imaging method, a storage medium, and the like.

### BACKGROUND

Among so-called CMOS sensors, there is a so-called global shutter (hereinafter referred to as "GS") sensor that has a GS function by having a memory unit in each pixel. That is, each pixel of the GS sensor includes a gate that transfers a signal charge accumulated in a photoelectric conversion unit to a charge holding unit, and by transferring the signal charge from the photoelectric conversion unit to the charge holding unit simultaneously for all pixels, the timing of starting and ending signal accumulation in the photoelectric conversion unit can be made the same for all pixels.

In addition, by having a plurality of charge holding units for one photoelectric conversion unit and transferring signal charges to each charge holding unit multiple times during one frame, each charge holding unit can hold the signal charges with different accumulation periods, and images with different dynamic ranges can be acquired. Also, by combining these images, a single image with a high dynamic range can be obtained. U.S. Patent Application Publication No. 2013/0135486 describes such a GS pixel configuration.

On the other hand, Japanese Patent Laid-Open No. 2017-55322 describes a configuration for performing a batch transfer drive in which pixel signals of a plurality of rows are read by transferring charges all at once, and a batch reset drive for a plurality of rows in order to control an exposure period. However, since the charges of the plurality of rows are transferred all at once, there is a possibility of a change in a potential of a batch transfer drive wiring or a batch reset drive wiring during reading of the pixel signals.

### SUMMARY

Thus, due to capacitive coupling between the batch transfer drive wiring or batch reset drive wiring and another wiring, potential fluctuations are propagated to, for example, a pixel read line, a power supply line, or the like, causing noise in a pixel signal of the row being read at that time. This causes horizontal lines and degrades image quality.

An imaging system of one aspect of the present disclosure including
a plurality of pixels, each pixel including:
a photoelectric conversion unit configured to generate an electric charge by photoelectric conversion;
two or more charge holding units configured to hold the electric charge;
a transfer unit configured to transfer the electric charge from the photoelectric conversion unit to the charge holding units;
a charge discharge unit configured to discharge the electric charge accumulated in the photoelectric conversion unit; and
a read unit configured to read a signal in accordance with an amount of electric charge transferred from the charge holding units, and
a control unit configured to perform batch drive control of simultaneously driving at least one of the transfer units and the charge discharge units for the plurality of pixels, and perform the photoelectric conversion during two or more different exposure periods in one frame period and control one of times for reading signals in accordance with electric charges accumulated in each exposure period not to overlap the timing for the batch drive control.

Further features of the present disclosure will become apparent from the following description of embodiments with reference to the attached drawings. The following description of embodiments is described by way of example.

### BRIEF DESCRIPTION OF THE DRAWINGS

Fig. 1 is a circuit block diagram showing a schematic configuration example of a photoelectric conversion device according to a first embodiment of the present disclosure.
Fig. 2 is an equivalent circuit diagram showing a configuration example of each pixel of the photoelectric conversion device according to the first embodiment of the present disclosure.
Fig. 3 is a timing diagram showing an example of a basic driving method relating to an exposure period of the photoelectric conversion device according to the first embodiment of the present disclosure.
Fig. 4 is a timing diagram showing an example of a driving method relating to reading of the photoelectric conversion device according to the first embodiment of the present disclosure.
Fig. 5 is an equivalent circuit diagram showing a configuration example of each pixel of a photoelectric conversion device according to a second embodiment of the present disclosure.
Fig. 6 is a timing diagram showing an example of a driving method relating to reading of the photoelectric conversion device according to the second embodiment of the present disclosure.
Fig. 7 is an equivalent circuit diagram showing a configuration example of each pixel of a photoelectric conversion device according to a third embodiment of the present disclosure.
Fig. 8 is a timing diagram showing an example of a basic driving method relating to an exposure time of the photoelectric conversion device according to the third embodiment of the present disclosure.
Fig. 9A is a timing diagram showing an example of a driving method for reading of the photoelectric conversion device according to the third embodiment of the present disclosure.
Fig. 9B is a timing diagram showing an example of a driving method for reading of the photoelectric conversion device according to the third embodiment of the present disclosure.
Fig. 10 is an equivalent circuit diagram showing a configuration example of each pixel of a photoelectric conversion device according to a fourth embodiment of the present disclosure.
Fig. 11 is a timing diagram showing an example of a basic driving method relating to an exposure time of the photoelectric conversion device according to the fourth embodiment of the present disclosure.
Fig. 12 is a timing diagram showing an example of a driving method relating to reading of the photoelectric conversion device according to the fourth embodiment of the present disclosure.
Fig. 13 is a timing diagram showing an example of a basic driving method relating to an exposure time of the photoelectric conversion device according to the fifth embodiment of the present disclosure.
Fig. 14 is a functional block diagram showing a schematic configuration example of an imaging system according to a sixth embodiment of the present disclosure.
Fig. 15 is a functional block diagram showing a detailed configuration example of a signal processing unit of the imaging system according to the sixth embodiment of the present disclosure.

### DESCRIPTION OF THE EMBODIMENTS

Hereinafter, with reference to the accompanying drawings, favorable modes of the present disclosure will be described using embodiments. In each diagram, the same reference signs are applied to the same members or elements, and duplicate description will be omitted or simplified.

In addition, in each embodiment described below, an example using a complementary metal oxide semiconductor (CMOS) image sensor as a photoelectric conversion device will be described. However, the photoelectric conversion device may be, for example, a distance measurement device using Time of Flight (TOF), a photometry device for measuring an intensity of radiation of incident light, or the like, and includes them.

### <First Embodiment>

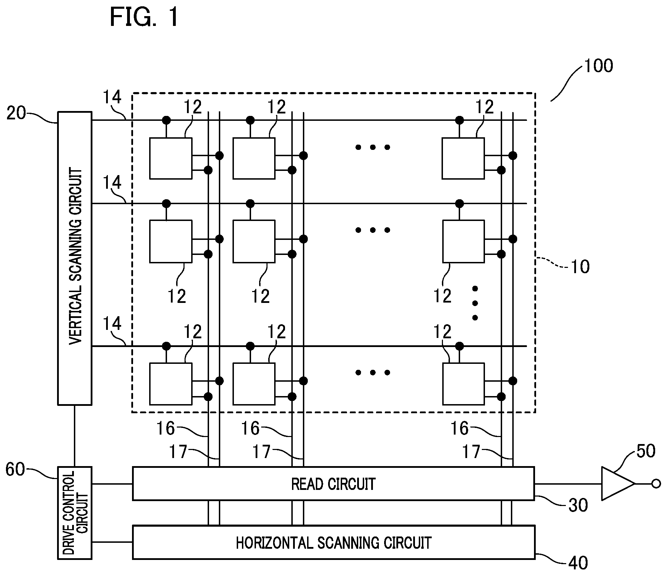

A photoelectric conversion device according to a first embodiment of the present disclosure and a driving method thereof will be described below with reference to Figs. 1 to 4. Fig. 1 is a circuit block diagram showing a schematic configuration example of the photoelectric conversion device according to the first embodiment of the present disclosure.

As shown in Fig. 1, a photoelectric conversion device 100 according to the present embodiment has a pixel unit 10, a vertical scanning circuit 20, a read circuit 30, a horizontal scanning circuit 40, an output circuit 50, and a drive control circuit 60.

The pixel unit 10 is connected to the vertical scanning circuit 20 and the read circuit 30. The read circuit 30 is connected to the horizontal scanning circuit 40 and the output circuit 50. The drive control circuit 60 is connected to the vertical scanning circuit 20, the read circuit 30, and the horizontal scanning circuit 40.

The pixel unit 10 is provided with a plurality of pixels 12 arranged in a matrix to form a plurality of rows and a plurality of columns. Each of the plurality of pixels 12 includes a photoelectric conversion unit configured of a photoelectric conversion element such as a photodiode, and the photoelectric conversion unit generates an electric charge by photoelectric conversion to output a pixel signal in accordance with an intensity of radiation of incident light.

The number of rows and the number of columns of a pixel array arranged in the pixel unit 10 are not particularly limited. Also, in addition to effective pixels that output pixel signals in accordance with the intensity of radiation of the incident light, optical black pixels that are light-shielded photoelectric conversion units and dummy pixels that do not output signals may be arranged in the pixel unit 10.

In each column of the pixel unit 10, vertical output lines 16 and 17 are arranged to extend in a second direction (longitudinal direction in Fig. 1) intersecting a first direction (lateral direction in Fig. 1, also called a row direction or horizontal direction). Each of the vertical output lines 16 and 17 is connected to the plurality of pixels 12 arranged in the second direction and serves as a common signal line for the plurality of pixels 12.

The second direction in which the vertical output lines 16 and 17 extend may be called a column direction or vertical direction. The vertical output lines 16 and 17 are connected to the read circuit 30. The vertical scanning circuit 20 has a function of receiving drive control signals from the drive control circuit 60, generating control signals to drive the pixels 12, and outputting them to the pixel unit 10 via control lines 14. A logic circuit such as a shift register or an address decoder is used for the vertical scanning circuit 20.

The vertical scanning circuit 20 sequentially outputs the control signals to the control lines 14 of each row and sequentially drives the plurality of pixels 12 of the pixel unit 10 row by row. Signals read from the plurality of pixels 12 row by row are input to the read circuit 30 via the vertical output lines 16 and 17 arranged in each column of the pixel unit 10.

The read circuit 30 has a function of performing predetermined processing, for example, signal processing such as amplification processing or addition processing, on the signals read from the pixels 12. In addition, the read circuit 30 may further include another processing circuit such as an analog-to-digital (A/D) conversion circuit.

The horizontal scanning circuit 40 has a function of receiving drive control signals from the drive control circuit 60, generating control signals for sequentially transferring signals processed by the read circuit 30 to the output circuit 50 for each column, and outputting the signals to the read circuit 30. A logic circuit such as a shift register or an address decoder is used for the horizontal scanning circuit 40.

The output circuit 50 is configured of a buffer amplifier, a differential amplifier, or the like, and is a circuit unit for amplifying and outputting signals of the column selected by the horizontal scanning circuit 40. The output circuit 50 may further have a signal processing unit that performs a predetermined signal process such as correction process or a high dynamic range (HDR) synthesis process, on the pixel signals. Also, in the present embodiment, the output circuit 50 performs correction of image quality degradation caused by potential fluctuations associated with the global electronic shutter operation.

The drive control circuit 60 supplies drive control signals to the vertical scanning circuit 20, the read circuit 30, and the horizontal scanning circuit 40 to control their operations and times on the basis of vertical synchronous signals VD and horizontal synchronous signals HD. That is, it functions as an exposure control unit and a read control unit for the pixels 12.

In addition, at least some of the drive control signals supplied to the vertical scanning circuit 20, the read circuit 30, and the horizontal scanning circuit 40 may be supplied from outside the photoelectric conversion device 100. Also, the vertical synchronous signals VD and the horizontal synchronous signals HD may be generated internally or may be supplied from outside.

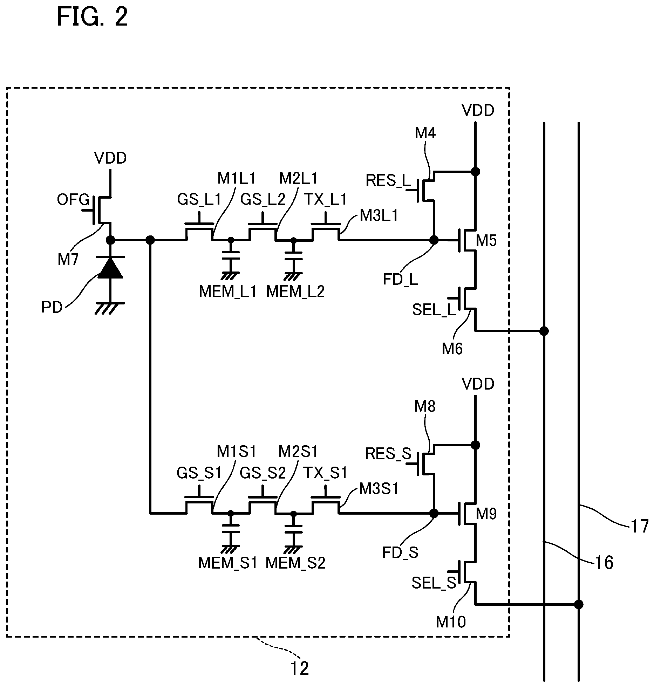

Fig. 2 is an equivalent circuit diagram showing a configuration example of each pixel of the photoelectric conversion device according to the first embodiment of the present disclosure. As shown in Fig. 2, each of the pixels 12 has a photoelectric conversion unit PD, a transfer transistor M1L1, a transfer transistor M1S1, a transfer transistor M2L1, a transfer transistor M2S1, a transfer transistor M3L1, and a transfer transistor M3S1.

In addition, each of the pixels 12 further has a reset transistor M4, a reset transistor M8, an amplification transistor M5, an amplification transistor M9, a selection transistor M6, a selection transistor M10, and a charge discharge transistor M7. Here, the charge discharge transistor M7 functions as a charge discharge unit that discharges the electric charge accumulated in the photoelectric conversion unit.

The photoelectric conversion unit PD is configured of a photoelectric conversion element, for example, a photodiode. If electrons are used as signal charges, each transistor is configured of an N-type MOS transistor. Also, each transistor does not necessarily have to be an N-type MOS transistor, and each transistor may be configured of a P-type MOS transistor and holes may be used as signal charges.

An anode of the photoelectric conversion unit PD is connected to a ground node, and a cathode thereof is connected to a source of the transfer transistor M1L1, a source of the transfer transistor M1S1, and a source of the charge discharge transistor M7.

A drain of the transfer transistor M1L1 is connected to a source of the transfer transistor M2L1. A connection node between the drain of the transfer transistor M1L1 and the source of the transfer transistor M2L1 includes a capacitive component and functions as a charge holding unit (charge holding unit MEM_L1).

A drain of the transfer transistor M1S1 is connected to a source of the transfer transistor M2S1. A connection node between the drain of the transfer transistor M1S1 and the source of the transfer transistor M2S1 includes a capacitive component and functions as a charge holding unit (charge holding unit MEM_S1).

A drain of the transfer transistor M2L1 is connected to a source of the transfer transistor M3L1. A connection node between the drain of the transfer transistor M2L1 and a source of the transfer transistor M3L1 includes a capacitive component and functions as a charge holding unit (charge holding unit MEM_L2).

A drain of the transfer transistor M2S1 is connected to a source of the transfer transistor M3S1. A connection node between the drain of the transfer transistor M2S1 and a source of the transfer transistor M3S1 includes a capacitive component and functions as a charge holding unit (charge holding unit MEM_S2).

Here, the charge holding unit MEM_L1, the charge holding unit MEM_L2, the charge holding unit MEM_S1, and the charge holding unit MEM_S2 function as four charge holding units that hold electric charges from the photoelectric conversion unit. In addition, the transfer transistor M1L1, the transfer transistor M1S1, the transfer transistor M2L1, and the transfer transistor M2S1 function as transfer units that transfer electric charges from the photoelectric conversion unit to the charge holding units.

That is, in the present embodiment as shown in Fig. 2, a configuration in which two charge holding units can be connected to the photoelectric conversion unit, and other charge holding units can be connected to the two charge holding units in series with each other is adopted.

A drain of the transfer transistor M3L1 is connected to a source of the reset transistor M4 and a gate of the amplification transistor M5. A connection node of the drain of the transfer transistor M3L1, the source of the reset transistor M4, and the gate of the amplification transistor M5 forms a floating diffusion unit FD_L. The floating diffusion unit FD_L includes a capacitive component (floating diffusion capacitance) and functions as a charge holding unit.

A drain of the transfer transistor M3S1 is connected to a source of the reset transistor M8 and a gate of the amplification transistor M9. A connection node of the drain of the transfer transistor M3S1, the source of the reset transistor M8 and the gate of the amplification transistor M9 forms a floating diffusion unit FD_S. The floating diffusion unit FD_S includes a capacitive component (floating diffusion capacitance) and functions as a charge holding unit.

A drain of the reset transistor M4, a drain of the reset transistor M8, a drain of the amplification transistor M5, a drain of the amplification transistor M9, and a drain of the charge discharge transistor M7 are connected to a power supply voltage line (voltage VDD).

Drain voltages of the reset transistor M4 and the reset transistor M8, drain voltages of the amplification transistor M5 and the amplification transistor M9, and a drain voltage of the charge discharge transistor M7 may differ in at least one part.

A source of the amplification transistor M5 is connected to a drain of the selection transistor M6, and a source of the amplification transistor M9 is connected to a drain of the selection transistor M10. A source of the selection transistor M6 is connected to the vertical output line 16, and a source of the selection transistor M10 is connected to the vertical output line 17.

Here, the transfer transistor M3L1, the reset transistor M4, the amplification transistor M5, and the selection transistor M6 function as read units that read a signal in accordance with an amount of electric charge transferred from the charge holding units.

In addition, the transfer transistor M3S1, the reset transistor M8, the amplification transistor M9, and the selection transistor M10 also function as read units that read a signal in accordance with an amount of electric charge transferred from the charge holding units. Also, these read units perform an operation of reading during an exposure operation of the photoelectric conversion unit.

Each of the control lines 14 includes eleven signal lines. Also, among them, six signal lines are respectively connected to the transfer transistor M1L1, the transfer transistor M1S1, the transfer transistor M2L1, the transfer transistor M2S1, the transfer transistor M3L1, and the transfer transistor M3S1.

In addition, the remaining five signal lines are connected to gates of the reset transistor M4, the reset transistor M8, the selection transistor M6, the selection transistor M10, and the charge discharge transistor M7.

A control signal GS_L1 is supplied from the vertical scanning circuit 20 to the signal line connected to a gate of the transfer transistor M1L1. A control signal GS_L2 is supplied from the vertical scanning circuit 20 to the signal line connected to a gate of the transfer transistor M2L1. A control signal TX_L1 is supplied from the vertical scanning circuit 20 to the signal line connected to a gate of the transfer transistor M3L1.

A control signal GS_S1 is supplied from the vertical scanning circuit 20 to the signal line connected to a gate of the transfer transistor M1S1. A control signal GS_S2 is supplied from the vertical scanning circuit 20 to the signal line connected to a gate of the transfer transistor M2S1. A control signal TX_S1 is supplied from the vertical scanning circuit 20 to the signal line connected to a gate of the transfer transistor M3S1.

A control signal RES_L is supplied from the vertical scanning circuit 20 to the signal line connected to the gate of the reset transistor M4. A control signal RES_S is supplied from the vertical scanning circuit 20 to the signal line connected to the gate of the reset transistor M8.

A control signal SEL_L is supplied from the vertical scanning circuit 20 to the signal line connected to the gate of the selection transistor M6. A control signal SEL_S is supplied from the vertical scanning circuit 20 to the signal line connected to the gate of the selection transistor M10. A control signal OFG is supplied from the vertical scanning circuit 20 to the signal line connected to the gate of the charge discharge transistor M7.

In a case in which each transistor is configured of an N-type transistor, if a control signal at high level is supplied from the vertical scanning circuit 20, the corresponding transistor is turned on, and if a control signal at low level is supplied from the vertical scanning circuit 20, the corresponding transistor is turned off.

The photoelectric conversion unit PD photoelectrically converts incident light into an amount of electric charge corresponding to its intensity of radiation, and accumulates the generated electric charge.

The transfer transistor M1L1 functions as a transfer unit that performs an operation of transferring the electric charge held by the photoelectric conversion unit PD to the charge holding unit MEM_L1 when it is turned on. The transfer transistor M2L1 functions as a transfer unit that performs an operation of transferring the electric charge held by the charge holding unit MEM_L1 to the charge holding unit MEM_L2 when it is turned on.

The transfer transistor M3L1 functions as a transfer unit that performs an operation of transferring the electric charge held by the charge holding unit MEM_L2 to the floating diffusion unit FD_L when it is turned on.

The transfer transistor M1S1 functions as a transfer unit that performs an operation of transferring the electric charge held by the photoelectric conversion unit PD to the charge holding unit MEM_S1 when it is turned on. The transfer transistor M2S1 functions as a transfer unit that performs an operation of transferring the electric charge held by the charge holding unit MEM_S1 to the charge holding unit MEM_S2 when it is turned on.

The transfer transistor M3S1 functions as a transfer unit that performs an operation of transferring the electric charge held by the charge holding unit MEM_S2 to the floating diffusion unit FD_S when it is turned on.

The amplification transistor M5 and the amplification transistor M9 are each configured such that the voltage VDD is supplied to the drain and a bias current is supplied to the source from a current source (not shown) via the selection transistor M6 or the selection transistor M10. In addition, the amplification transistor M5 and the amplification transistor M9 form an amplifier unit (source follower circuit) whose gate is an input node.

Thus, the amplification transistor M5 outputs a signal in accordance with a potential of the floating diffusion unit FD_L to the vertical output line 16 via the selection transistor M6. In addition, the amplification transistor M9 outputs a signal in accordance with a potential of the floating diffusion unit FD_S to the vertical output line 17 via the selection transistor M10.

That is, the floating diffusion unit FD_L, the amplification transistor M5, and the selection transistor M6 form an output unit that outputs a signal in accordance with the amount of electric charge held by the floating diffusion unit. Similarly, the floating diffusion unit FD_S, the amplification transistor M9, and the selection transistor M10 form an output unit that outputs a signal in accordance with the amount of electric charge held by the floating diffusion unit.

Also, Fig. 2 shows a configuration in which the two charge holding units (the charge holding unit MEM_L2 and the charge holding unit MEM_S2) have different transfer units and output units. However, it is acceptable as long as signals based on the respective electric charges can be output to the vertical output lines independently from the above two charge holding units, and for example, the two charge holding units may have a common output unit.

The reset transistor M4 and the reset transistor M8 function as reset units that respectively perform operations of resetting the floating diffusion unit FD_L and the floating diffusion unit FD_S to voltages in accordance with the voltage VDD when they are turned on.

The charge discharge transistor M7 functions as an overflow drain unit that discharges an excess electric charge in the photoelectric conversion unit PD in an off state. Also, the charge discharge transistor M7 functions as a reset unit that performs an operation of resetting the photoelectric conversion unit PD to a voltage in accordance with the voltage VDD when it is turned on.

The selection transistor M6 and the selection transistor M10 function as selection units that select whether or not to output signals in accordance with source voltages of the amplification transistor M5 and the amplification transistor M9 as pixel signals to the vertical output line 16 or the vertical output line 17.

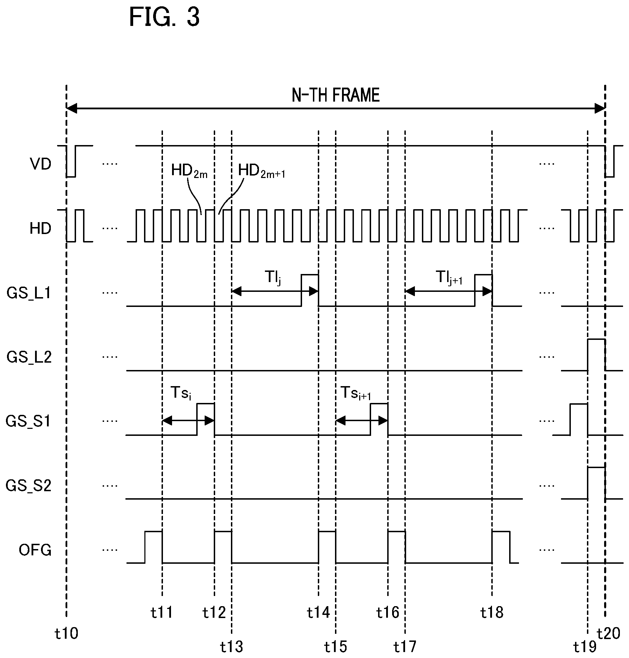

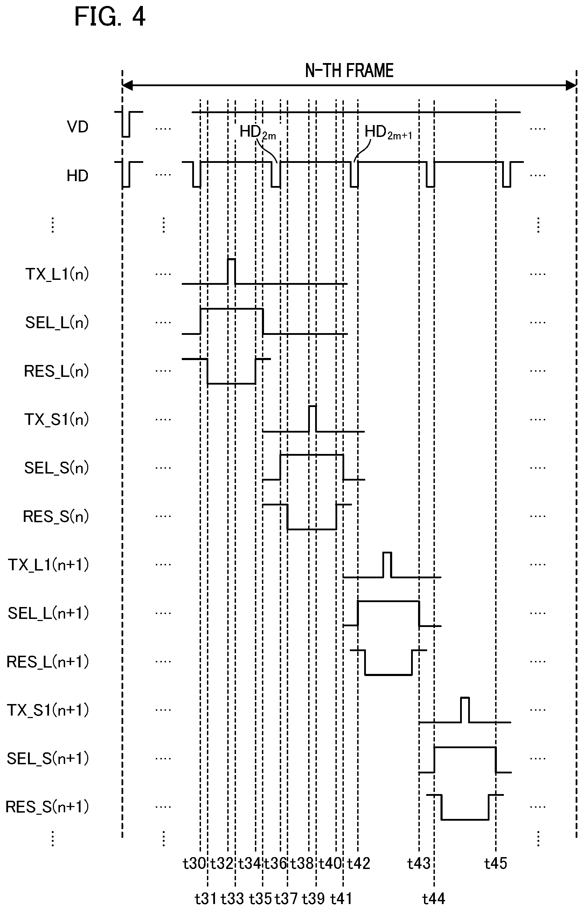

Next, a driving method of the photoelectric conversion device according to the present embodiment will be described with reference to Figs. 3 and 4. Fig. 3 is a timing diagram showing an example of a basic driving method relating to an exposure period of the photoelectric conversion device according to the first embodiment of the present disclosure.

Fig. 3 shows an example of changes over time of the control signals GS_L1 and GS_L2 supplied to the transfer transistors M1L1 and M2L1 in the N-th frame. Also, an example of changes over time of the control signal GS_S1, the control signal GS_S2, and the control signal OFG supplied to the transfer transistor M1S1, the transfer transistor M2S1, and the charge discharge transistor M7, and the vertical synchronous signal VD and the horizontal synchronous signal HD is shown.

In the first embodiment, a falling edge of the vertical synchronous signal VD is the frame start timing, and each control signal is controlled with a falling edge of the horizontal synchronous signal HD as a reference. That is, at time t10 shown in Fig. 3, the N-1-th frame ends and the N-th frame starts, and at time t20, the N-th frame ends and the N+1-th frame starts. Here, N is an integer of 1 or more.

Also, time t11 to time t19 shown in Fig. 3 are synchronized with falling edges of the horizontal synchronous signal HD. In addition, when each control signal is at a high level, the corresponding transistor is active (in an on state). Further, in the present embodiment, since the driving is performed by a GS method, driving and timing for the exposure operation are the same for all rows of the pixels 12.

In the first embodiment, in each frame, a plurality of (Ks times) accumulation periods Ts and a plurality of (Kl times) accumulation periods Tl are executed. That is, photoelectric conversion is performed for two or more different exposure periods in one frame period.

The accumulation periods Ts are periods for accumulating signal charges in the charge holding unit MEM_S1 or MEM_S2, and the accumulation periods Tl are periods for accumulating signal charges in the charge holding unit MEM_L1 or MEM_L2.

Operations during the i-th accumulation period Tsi and (i+1)-th accumulation period Tsi+1 among the Ks times and operations during the j-th accumulation period Tlj and (j+1)-th accumulation period Tlj+1 among the Kl times will be described below with reference to Fig. 3.

Here, i is an integer of 1 or more and Ks-1 or less. j is an integer of 1 or more and Kl-1 or less. Also, the number of times Ks and Kl can be set in accordance with the total accumulation period in one frame period, or the like, and the number of times Ks and Kl can be the same or different.

The control signal OFG is controlled from low level to high level at the horizontal synchronous signal HD immediately before time t11. The charge discharge transistor M7 is turned on by receiving the high level control signal OFG, and the photoelectric conversion unit PD is reset to a potential in accordance with the voltage VDD.

At time t11, the vertical scanning circuit 20 controls the control signal OFG from high level to low level. Thus, the charge discharge transistor M7 is turned off and the reset state of the photoelectric conversion unit PD is released.

That is, the timing when the control signal OFG transitions from high level to low level is a start time of the accumulation period Tsi for a signal charge. The signal charge generated by incidence of photons on the photoelectric conversion unit PD while the charge discharge transistor M7 is off is accumulated in the photoelectric conversion unit PD.

At the horizontal synchronous signal HD immediately before the subsequent time t12, the vertical scanning circuit 20 controls the control signal GS_S1 from low level to high level. Thus, the transfer transistor M1S1 is turned on, and the signal charge accumulated in the photoelectric conversion unit PD is transferred to the charge holding unit MEM_S1.

The time t12 when the transfer transistor M1S1 is turned off is an end time of the signal charge accumulation period Tsi. That is, the period from time t11 to time t12 is the signal charge accumulation period Tsi. At time t12, the vertical scanning circuit 20 controls the control signal OFG from low level to high level. Thus, the charge discharge transistor M7 is turned on, and the photoelectric conversion unit PD is reset to a potential in accordance with the voltage VDD.

At the subsequent time t13, the vertical scanning circuit 20 controls the control signal OFG from high level to low level. Thus, the charge discharge transistor M7 is turned off, and the reset state of the photoelectric conversion unit PD is released. That is, the timing when the control signal OFG transitions from high level to low level is a start time of the signal charge accumulation period Tlj.

Also, here, the photoelectric conversion unit PD is reset by turning on the charge discharge transistor M7. However, in the case of a configuration in which complete transfer is performed so that no signal charge remains in the photoelectric conversion unit PD during transfer, the resetting of the photoelectric conversion unit PD performed by the charge discharge transistor M7 may be omitted.

In that case, the timing when the transfer transistor (here, the transfer transistor M1S1) is turned off (time t12) is the start time of the signal charge accumulation period Tlj. Also, the complete transfer of the signal charge from the photoelectric conversion unit to the charge holding unit can be realized by potential design of the photoelectric conversion unit, the transfer transistor, and the charge holding unit.

At the horizontal synchronous signal HD immediately before the subsequent time t14, the vertical scanning circuit 20 controls the control signal GS_L1 from low level to high level. Thus, the transfer transistor M1L1 is turned on, and the signal charge accumulated in the photoelectric conversion unit PD is transferred to the charge holding unit MEM_L1. The time t14 when the transfer transistor M1L1 is turned off is an end time of the signal charge accumulation period Tlj.

After this, the accumulation period Ts and the accumulation period Tl are repeated a predetermined number of times in the same manner as the driving of the period from time t11 to time t12 and from time t13 to time t14. For example, as shown in Fig. 3, the accumulation period Tsi+1 is performed during the period from time t15 to time t16, and the accumulation period Tlj+1 is performed during the period from time t17 to time t18.

In this way, Ks accumulation periods Ts and Kl accumulation periods Tl are performed. Thus, the charge holding unit MEM_S1 holds the signal charge generated in the photoelectric conversion unit PD during an accumulation period Tshort, which is the sum of lengths of the Ks accumulation periods Ts from an accumulation period Ts1 to an accumulation period TsKs.

In addition, the charge holding unit MEM_L1 holds the signal charge generated by the photoelectric conversion unit PD during an accumulation period Tlong, which is the sum of lengths of the Kl accumulation periods Tl from an accumulation period Tl1 to an accumulation period TlKl.

The time t19 is an end time of the accumulation period TsKs in the first embodiment. Also, from time t19 to time t20, the vertical scanning circuit 20 controls the control signal GS_S2 and the control signal GS_L2 to a high level.

Thus, the transfer transistor M2S1 is turned on, and the signal charge held in the charge holding unit MEM_S1 is transferred to the charge holding unit MEM_S2. In addition, the transfer transistor M2L1 is turned on, and the signal charge held in the charge holding unit MEM_L1 is transferred to the charge holding unit MEM_L2. Also, although the transfer transistors M2S1 and M2L1 are turned on simultaneously here, it is sufficient to turn them on between the end of the accumulation period and the end of the frame.

That is, the transfer transistor M2S1 may be turned on between the end of the accumulation period TsKs and time t20, which is the end time of the N-th frame. Also, the transfer transistor M2L1 may be turned on between the end of the accumulation period TlKl and time t20, which is the end time of the N-th frame.

In the present embodiment, the control signals OFG, GS_L1, GS_S1, GS_L2, and GS_S2 are controlled so that the accumulation periods Ts and the accumulation periods Tl are periods with the odd-numbered horizontal synchronous signals HD.

Also, the control signal OFG becomes high level at the even-numbered horizontal synchronous signals HD in the frame, and the control signals GS_L1, GS_S1, GS_L2, and GS_S2 become high level at the odd-numbered horizontal synchronous signals HD in the frame.

Here, the horizontal synchronous signal HD immediately before time t12 is defined as the 2m-th horizontal synchronous signal HD(2m) of the N-th frame, and the horizontal synchronous signal HD at time t12 is defined as the (2m+1)-th horizontal synchronous signal HD(2m+1) of the N-th frame, which will be used in the following description. Here, m is an integer of 1 or more.

In this way, charge accumulation is executed in each frame during the accumulation period Tlong and the accumulation period Tshort. Thus, the charge holding unit MEM_L2 holds the signal charge generated in the photoelectric conversion unit PD during the accumulation period Tlong. Also, the charge holding unit MEM_S2 holds the signal charge generated in the photoelectric conversion unit PD during the accumulation period Tshort.

Fig. 4 is a timing diagram showing an example of a driving method relating to reading of the photoelectric conversion device according to the first embodiment of the present disclosure. Fig. 4 shows control signals supplied to the transfer transistor M3L1, the transfer transistor M3S1, the selection transistor M6, the selection transistor M10, the reset transistor M4, and the reset transistor M8.

That is, changes over time of the control signals TX_L1, TX_S1, SEL_L, SEL_S, RES_L, and RES_S are shown. Also, in Fig. 4, n is an integer of 1 or more. When each control signal is at high level, the corresponding transistor is active (on state).

Fig. 4 shows control signals supplied to the plurality of pixels 12 in the n-th row and control signals supplied to the plurality of pixels 12 in the (n+1)-th row among control signals corresponding to each of the plurality of rows constituting the pixel unit 10. The control signals supplied to the n-th row of the pixels 12 have (n) added to their reference signs, and the control signals supplied to the pixels 12 in the (n+1)-th row have (n+1) added to their reference signs.

In each frame, signals based on the signal charges accumulated in the charge holding units MEM_L2 and the charge holding units MEM_S2 of the pixels 12 in each row are sequentially read. At the start time of the N-th frame, the charge holding units MEM_L2 and the charge holding units MEM_S2 of each of the pixels 12 respectively hold the signal charges accumulated during the accumulation period Tshort or the accumulation period Tlong of the (N-1)-th frame.

Immediately before time t30, the control signal TX_L1(n) and the control signal SEL_L(n) are at low level, and the control signal RES_L(n) is at high level.

At time t30, the vertical scanning circuit 20 controls the control signal SEL_L(n) from low level to high level, and thus the selection transistors M6 of the pixels 12 in the n-th row are turned on. Thus, the amplification transistors M5 of the pixels 12 in each column of the n-th row are connected to the vertical output lines 16 of the corresponding columns via the selection transistors M6, resulting in a selected state in which the pixel signals can be read.

In this case, the reset transistors M4 are on, and the floating diffusion units FD_L are reset to the potentials in accordance with the voltage VDD. That is, signals in accordance with the reset potentials of the floating diffusion units FD_L are output to the vertical output lines 16.

At the subsequent time t31, the vertical scanning circuit 20 controls the control signal RES_L(n) from high level to low level. Thus, the reset transistors M4 are turned off, and the reset states of the floating diffusion units FD_L are released. Voltages of the vertical output lines 16 that are adjusted after the reset transistors M4 are turned off are reset level voltages VRES_L of the floating diffusion units FD_L. In this way, the reset level voltages VRES_L are read out to the vertical output lines 16.

At the subsequent time t32, the vertical scanning circuit 20 controls the control signal TX_L1(n) from low level to high level. Thus, the transfer transistors M3L1 of the pixels 12 in the n-th row are turned on, and the signal charges held in the charge holding units MEM_L2 are transferred to the floating diffusion units FD_L.

Then, the floating diffusion units FD_L have potentials in accordance with amounts of signal charge transferred from the charge holding units MEM_L2, and voltages in accordance with the potentials of the floating diffusion units FD_L are output to the vertical output lines 16.

At time t33, the voltages of the vertical output lines 16 that are adjusted after the transfer transistors M3L1 are turned off are signal level voltages VSIG_L. In this way, the signal level voltages VSIG_L of the pixels 12 based on the signal charges held in the charge holding units MEM_L2 are read out to the vertical output lines 16.

Differences between the reset level voltages VRES_L and the signal level voltages VSIG_L thus obtained, that is, |VSIG_L-VRES_L|, are the pixel signals, which are physical quantities in accordance with the amounts of signal charge held in the charge holding units MEM_L2.

At the subsequent time t34, the vertical scanning circuit 20 controls the control signal RES_L(n) from low level to high level. Thus, the reset transistors M4 of the pixels 12 in the n-th row are turned on and the floating diffusion units FD_L are reset to the potentials in accordance with the voltage VDD.

At the subsequent time t35, the vertical scanning circuit 20 controls the control signal SEL_L(n) from high level to low level. Thus, the selection transistors M6 of the pixels 12 in the n-th row are turned off, and the n-th row is deselected.

Here, the operation of reading the pixel signals from the charge holding units MEM_L2 described during the period from time t30 to time t35 functions as a first read operation to read the pixel signals in accordance with the amounts of electric charge accumulated during a first exposure period (accumulation period Tlong).

Immediately before the subsequent time t36, it is assumed that the control signal TX_S1(n) and the control signal SEL_S(n) are at low level, and the control signal RES_S(n) is at high level.

At time t36, the vertical scanning circuit 20 controls the control signal SEL_S(n) from low level to high level, and thus the selection transistors M10 of the pixels 12 in the n-th row are turned on. Thus, the amplification transistors M9 of the pixels 12 in each column of the n-th row are connected to the vertical output lines 17 of the corresponding columns via the selection transistors M10, resulting in the selected state in which the pixel signals can be read.

In this case, the reset transistors M8 are on, and the floating diffusion units FD_S are reset to the potentials in accordance with the voltage VDD. Thus, signals in accordance with the reset potentials of the floating diffusion units FD_S are output to the vertical output lines 17.

At the subsequent time t37, the vertical scanning circuit 20 controls the control signal RES_S(n) from high level to low level. Thus, the reset transistors M8 are turned off and the reset states of the floating diffusion units FD_S are released. A voltage of the vertical output lines 17 that are adjusted after the reset transistors M8 are turned off is a reset level voltage VRES_S of the floating diffusion units FD_S. In this way, the reset level voltage VRES_S is read out to the vertical output lines 17.

At the subsequent time t38, the vertical scanning circuit 20 controls the control signal TX_S1(n) from low level to high level. Thus, the transfer transistors M3S1 of the pixels 12 in the n-th row are turned on, and the signal charges held in the charge holding units MEM_S2 are transferred to the floating diffusion units FD_S.

Then, the floating diffusion units FD_S have potentials in accordance with the amounts of signal charge transferred from the charge holding units MEM_S2, and the voltages in accordance with the potentials of the floating diffusion units FD_S are output to the vertical output lines 17. At time t39, the voltages of the vertical output lines 17 that are adjusted after the transfer transistors M3S1 are turned off are signal level voltages VSIG_S.

Thus, the signal level voltages VSIG_S of the pixels 12 based on the signal charges held in the charge holding units MEM_S2 are read out to the vertical output lines 17. Differences between the reset level voltages VRES_S and the signal level voltages VSIG_S thus obtained, that is, |VSIG_S-VRES_S|, are the pixel signals, which are physical quantities in accordance with the amounts of signal charge held in the charge holding units MEM_S2.

At the subsequent time t40, the vertical scanning circuit 20 controls the control signal RES_S(n) from low level to high level. Thus, the reset transistors M8 of the pixels 12 in the n-th row are turned on, and the floating diffusion units FD_S are reset to the potentials in accordance with the voltage VDD.

At the subsequent time t41, the vertical scanning circuit 20 controls the control signal SEL_S(n) from high level to low level. Thus, the selection transistors M10 of the pixels 12 in the n-th row are turned off, and the n-th row is deselected.

Here, the operation of reading the pixel signal from the charge holding units MEM_S2 described during the period from time t36 to time t41 functions as a second read operation to read the pixel signals in accordance with the amounts of charge accumulated during a second exposure period (accumulation period Tshort).

The first and second read operations described above are started on the basis of the falling edge of the horizontal synchronous signal HD and are completed by the falling edge of the next horizontal synchronous signal HD.

In addition, during the period from time t42 to time t43, in the same manner as during the period from time t30 to time t35, the first read operation is performed from the pixels 12 in the (n+1)-th row. Also, during the period from time t44 to time t45, the second read operation is performed from the pixels 12 in the (n+1)-th row, similar to the period from time t36 to time t41. The same applies to read operations of the pixels 12 in the other rows.

In the present embodiment, the read timing is controlled so that the first read operation for the pixels 12 is performed at the timing of the odd-numbered horizontal synchronous signals HD in the frame, and the second read operation for the pixels 12 is performed at the timing of the even-numbered horizontal synchronous signals HD in the frame.

That is, the read timing is controlled so that the horizontal synchronous signal HD(2m) occurs immediately before time t36, which is the timing for starting the second read operation of the n-th row. Also, the read timing is controlled so that the horizontal synchronous signal HD(2m+1) occurs immediately before time t42, which is the timing for starting the first read operation of the (n+1)-th row.

In the present embodiment, after accumulation is started during the accumulation period Ts, the accumulation period Ts and the accumulation period Tl are alternately performed, and finally accumulation is performed during the accumulation period Ts, but the order of the accumulation period Ts and the accumulation period Tl may be reversed. Also, in the read operation, reading from the charge holding unit MEM_S2 is performed after reading from the charge holding unit MEM_L2, but the order may be reversed as long as they are read at different times.

Also, in the driving example described using Figs. 3 and 4, the length of the accumulation period Tlong may be the same as the length of the accumulation period Tshort, but they are preferably different from each other. By changing the length of the accumulation period Tlong and the length of the accumulation period Tshort, it is possible to acquire two types of images with different effective amounts of exposure in the same frame.

By correcting the signals of one of the two types of images acquired in this way in accordance with the ratio of the lengths of the accumulation periods and combining them with the signals of the other image to synthesize them into one image, an image with a wide dynamic range (HDR image) can be obtained The HDR image synthesis process may be performed by a signal processing unit inside the photoelectric conversion device or by an external signal processing device.

As described above, in the present embodiment, the driving is performed by a GS method, and thus driving related to the exposure operation, that is, transfer drive and reset drive, are performed for all pixels 12 in all rows collectively. In the present embodiment, the control signal GS_L1, the control signal GS_L2, the control signal GS_S1, and the control signal GS_S2 in Fig. 3 correspond to batch transfer drive control, and the control signal OFG corresponds to batch reset drive control.

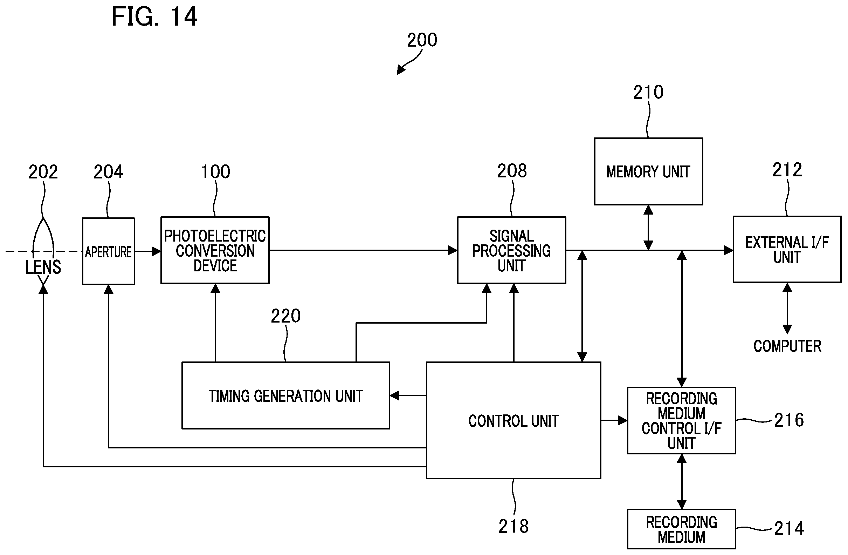

Also, batch drive control for simultaneously driving at least one of the transfer units and the charge discharge units for the plurality of pixels is performed, for example, by a control unit 218 (see Fig. 14), which will be described later.

In addition, in the first embodiment, if potential fluctuations caused by the above-mentioned batch drive control are propagated to a power supply line or the like, noise will be superimposed on the pixel signal read out at the same timing, causing horizontal lines on the screen. At the timing of the horizontal synchronous signal HD(2m) shown in Figs. 3 and 4, the batch transfer drive by the control signal GS_S1 is performed, and at the same time, the second read of the pixels in the n-th row is performed.

That is, for example, potential fluctuation noise caused by the control signal GS_S1 is superimposed on the n-th row of the image acquired during the accumulation period Tshort. Also, at the timing of the horizontal synchronous signal HD(2m+1), a batch reset operation is performed by the control signal OFG, and at the same time, the first read of the pixels in the (n+1)-th row is performed. That is, potential fluctuation noise caused by the control signal OFG is superimposed on the (n+1)-th row of the image acquired during the accumulation period Tlong.

In the present embodiment, a predetermined process is executed to correct image quality degradation due to noise superimposition associated with such a batch drive. This will be described below.

In the following description, it is assumed that the pixel unit 10 is a photoelectric conversion device having pixels 12 in v rows and h columns. and a pixel signal read in the first read operation will be expressed as Plong[x,y] and a pixel signal read in the second read operation will be expressed as Pshort[x,y]. Here, x and y are integers satisfying 1≤x≤v and 1≤y≤h. For example, pixel signals in the 64th column of the row that is output first in the N-th frame are expressed as Plong[1,64] and Pshort[1,64].

Here, focusing on the n-th row on which noise is superimposed as described in Figs. 3 and 4, a pixel signal of the n-th row of the image acquired during the accumulation period Tshort is Pshort[n,y]. Here, n is an integer satisfying 1≤n≤v. In this case, the pixel signal Pshort[n,y] and the pixel signal Plong[n,y] read from the same pixel at different times have no noise superimposed by a batch drive control signal, but there is a difference in brightness due to the difference in accumulation period.

That is, if C[n,y]=Plong[n,y]×(Tshort/Tlong) is set, a correction signal C[n,y] is obtained on the basis of the pixel signal Plong[n,y], which has no noise superimposed by the batch drive control signal. That is, by replacing the pixel signal Pshort[n,y], on which noise is superimposed, with the correction signal C[n,y], the noise caused by the batch drive control can be corrected.

On the other hand, a pixel signal of the (n+1)-th row of the image acquired during the accumulation period Tlong is Plong[n+1,y], and noise caused by the batch drive control is superimposed thereon. In this case, the pixel signal Plong[n+1,y] and a pixel signal Pshort[n+1,y] read from the same pixel at different times have no noise superimposed by the batch drive control signal, but there is a difference in brightness due to the difference in accumulation period.

Accordingly, a correction signal C[n+1,y] is calculated by setting C[n+1,y]=Pshort[n+1,y]×(Tlong/Tshort), and this correction signal C[n+1,y] is corrected by replacing it with the pixel signal Plong[n+1,y], on which noise is superimposed.

In this way, in the present embodiment, control is performed so that only one of two pixel signals read from a certain pixel 12 is superimposed with noise. That is, in an imaging method of the present embodiment, the charge discharge unit, the transfer unit, and the read unit are controlled to perform one of the first and second read operations at the same timing as the batch drive control.

In addition, one of the times for reading the signals in accordance with the electric charges accumulated in each exposure period is controlled not to overlap the timing of the batch drive control. That is, the charge discharge unit, the transfer unit, and the read unit are controlled to perform one of the first read operation and the second read operation at different timing from the batch drive control. Accordingly, due to the correction process as mentioned above, the pixel signal on which noise is superimposed can be corrected.

Also, the correction process of the present embodiment as mentioned above is one example, and other correction processes may be performed. For example, the pixel signal Plong[n,y] on which noise is superimposed is compared with the correction signal C[n,y] obtained by correcting the difference in brightness in accordance with the difference in exposure period. Then, a noise component Cn[n,y] caused by the batch drive control may be calculated and subtracted from the pixel signal Plong[n,y] to perform correction.

Also, in order to reduce the effect of random noise components, a noise component Cn'[n,y] obtained by taking a horizontal moving average from the noise component Cn[n,y] may be subtracted from the pixel signal Plong[n,y] to perform correction. Further, if either the pixel signal Plong[n,y] or the pixel signal Pshort[n,y] is saturated, the correction process may not be performed.

In addition, in the present embodiment, both the exposure timing and the read timing are controlled in order to ensure that the noise associated with the batch control signal is superimposed only on one of the two pixel signals read from the pixel 12. However, only the exposure timing may be controlled, or only the read timing may be controlled.

That is, the batch reset caused by the control signal OFG and the batch transfer caused by the control signal GS_L1, the control signal GS_S1, the control signal GS_L2, the control signal GS_S2, the control signal TX_L1, or the control signal TX_S1 may not occur at successive HD timings.

Alternatively, the first read and the second read of the n-th row may be set not to occur at the timing of successive horizontal synchronous signals HD. That is, the read timing may be controlled so that the read order is set in order of the first read of the n-th row, the first read of the (n+1)-th row, the second read of the n-th row, and the second read of the (n+1)-th row. Also, the correction process according to the present embodiment may be performed by a signal processing unit in the photoelectric conversion device, or by an external signal processing device.

As described above, in the present embodiment, the accumulation operations of the first accumulation period and the second accumulation period are performed in one frame period. In addition, one of the first read operation to read the pixel signal in accordance with the amount of electric charge accumulated in the first exposure period and the second read operation to read the pixel signal in accordance with the amount of electric charge accumulated in the second exposure period are performed at the timing that does not overlap the timing of the batch drive control. Accordingly, it is possible to acquire a video image in which image quality degradation caused by the global electronic shutter operation is corrected.

### <Second Embodiment>

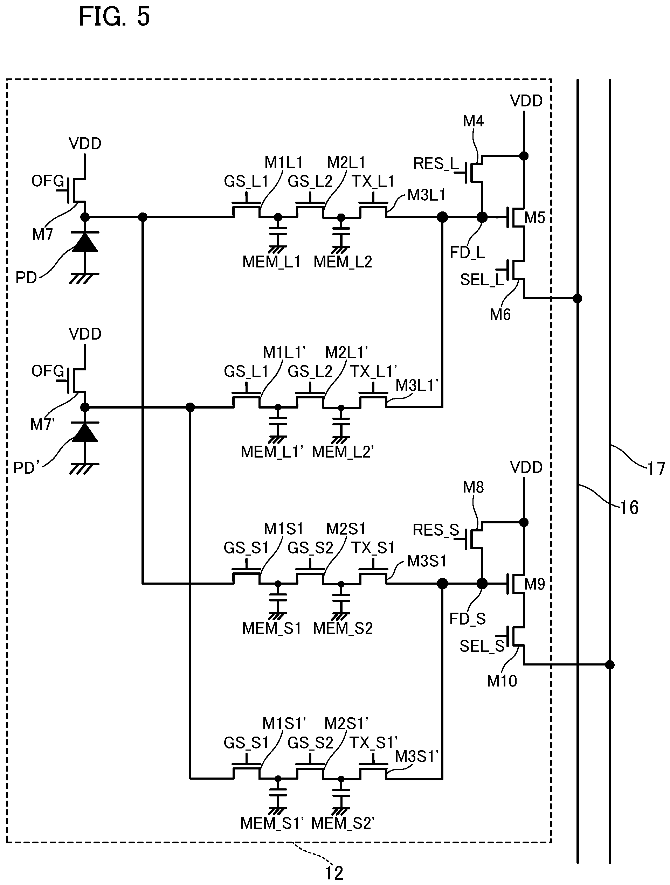

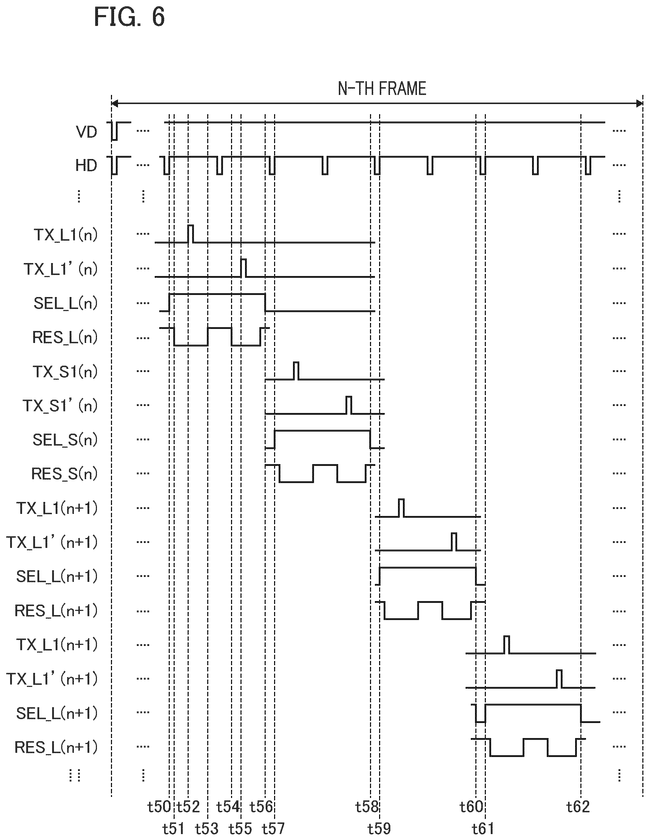

A photoelectric conversion device according to a second embodiment of the present disclosure and a driving method thereof will be described with reference to Figs. 5 and 6. Also, in the following description, the same configurations and processes as those of the first embodiment will be denoted by the same reference signs, and detailed description thereof will be omitted.

The second embodiment differs from the first embodiment in that there are a plurality of photoelectric conversion units in one pixel. In the first embodiment, one photoelectric conversion unit is disposed in one pixel, but in the second embodiment, there are a plurality of photoelectric conversion units in one pixel, which can improve functionality such as phase difference detection for focusing and ranging.

Fig. 5 is an equivalent circuit diagram showing a configuration example of each pixel of the photoelectric conversion device according to the second embodiment of the present disclosure. As shown in Fig. 2, each pixel 12 has the photoelectric conversion unit PD, the transfer transistor M1L1, the transfer transistor M1S1, the transfer transistor M2L1, the transfer transistor M2S1, the transfer transistor M3L1, and the transfer transistor M3S1.

Also, each pixel 12 further has the reset transistor M4, the reset transistor M8, the amplification transistor M5, the amplification transistor M9, the selection transistor M6, the selection transistor M10, and the charge discharge transistor M7.

In addition, the pixel 12 has a photoelectric conversion unit PD', a transfer transistor M1L1', a transfer transistor M1S1', a transfer transistor M2L1', a transfer transistor M2S1', transfer transistor M3L1', and transfer transistor M3S1', and charge discharge transistor M7'.

The photoelectric conversion unit PD' is configured of a photoelectric conversion element, for example, a photodiode. The photoelectric conversion units PD (a first photoelectric conversion unit) and PD' (a second photoelectric conversion unit) are disposed in the same pixel and receive light through a common light-collecting microlens (not shown).

That is, the PD and PD' receive light from different exit pupils of the same imaging lens. Accordingly, a distance to a subject can be calculated by detecting a phase difference between image signals obtained from a plurality of PDs and image signals obtained from a plurality of PDs'.

An anode of the photoelectric conversion unit PD' is connected to a ground node, and a cathode thereof is connected to a source of the transfer transistor M1L1', a source of the transfer transistor M1S1', and a source of the charge discharge transistor M7'.

A drain of the transfer transistor M1L1' is connected to a source of the transfer transistor M2L1'. A connection node between the drain of the transfer transistor M1L1' and the source of the transfer transistor M2L1' includes a capacitive component and functions as a charge holding unit (charge holding unit MEM L1').

A drain of the transfer transistor M1S1' is connected to a source of the transfer transistor M2S1'. A connection node between the drain of the transfer transistor M1S1' and the source of the transfer transistor M2S1' includes a capacitive component and functions as a charge holding unit (charge holding unit MEM_S1').

A drain of the transfer transistor M2L1' is connected to a source of the transfer transistor M3L1'. A connection node between the drain of the transfer transistor M2L1' and the source of the transfer transistor M3L1' includes a capacitive component and functions as a charge holding unit (charge holding unit MEM_L2').

A drain of the transfer transistor M2S1' is connected to a source of the transfer transistor M3S1'. A connection node between the drain of the transfer transistor M2S1' and the source of the transfer transistor M3S1' includes a capacitive component and functions as a charge holding unit (charge holding unit MEM_S2').

Here, the charge holding unit MEM_L1', the charge holding unit MEM_L2', the charge holding unit MEM_S1', and the charge holding unit MEM_S2' function as two or more charge holding units that hold electric charges from the photoelectric conversion unit.

Also, the transfer transistor M1L1', the transfer transistor M1S1', the transfer transistor M2L1', and the transfer transistor M2S1' function as transfer units that transfer electric charges from the photoelectric conversion unit to the charge holding units. A drain of the transfer transistor M3L1' is connected to the drain of the transfer transistor M3L1, the source of the reset transistor M4, and the gate of the amplification transistor M5.

A connection node of the drain of the transfer transistor M3L1, the drain of the transfer transistor M3L1', the source of the reset transistor M4, and the gate of the amplification transistor M5 forms the floating diffusion unit FD_L.

A drain of the transfer transistor M3S1' is connected to the drain of the transfer transistor M3S1, the source of the reset transistor M8 and the gate of the amplification transistor M9. A connection node of the drain of the transfer transistor M3S1, the drain of the transfer transistor M3S1', the source of the reset transistor M8, and the gate of the amplification transistor M9 forms the floating diffusion unit FD_S.

The drain of the reset transistor M4, the drain of the reset transistor M8, the drain of the amplification transistor M5, the drain of the amplification transistor M9, and the drain of the charge discharge transistor M7' are connected to the power supply voltage line (voltage VDD).

The drain voltages of the reset transistors M4 and M8, the drain voltages of the amplification transistors M5 and M9, and the drain voltage of the charge discharge transistor M7' may differ in at least one part.

Each of the control lines 14 includes 11 signal lines. Among them, six signal lines are respectively connected to gates of the transfer transistor M1L1', the transfer transistor M1S1', the transfer transistor M2L1', the transfer transistor M2S1', the transfer transistor M3L1', and the transfer transistor M3S1'.

Also, five signal lines are respectively connected to gates of the reset transistor M4, the reset transistor M8, the selection transistor M6, the selection transistor M10, and the charge discharge transistor M7'.

The control signal GS_L1 is supplied from the vertical scanning circuit 20 to the signal line connected to the gate of the transfer transistor M1L1'. The control signal GS_L2 is supplied from the vertical scanning circuit 20 to the signal line connected to the gate of the transfer transistor M2L1'. A control signal TX_L1' is supplied from the vertical scanning circuit 20 to the signal line connected to the gate of the transfer transistor M3L1'.

The control signal GS_S1 is supplied from the vertical scanning circuit 20 to the signal line connected to the gate of the transfer transistor M1S1'. The control signal GS_S2 is supplied from the vertical scanning circuit 20 to the signal line connected to the gate of the transfer transistor M2S1'.

A control signal TX_S1' is supplied from the vertical scanning circuit 20 to the signal line connected to the gate of the transfer transistor M3S1'. The control signal OFG is supplied from the vertical scanning circuit 20 to the signal line connected to the gate of the charge discharge transistor M7'.

The transfer transistor M1L1' functions as a transfer unit that performs an operation of transferring the electric charge held by the photoelectric conversion unit PD' to the charge holding unit MEM_L1' when it is turned on. The transfer transistor M2L1' functions as a transfer unit that performs an operation of transferring the electric charge held by the charge holding unit MEM_L1' to the charge holding unit MEM_L2' when it is turned on.

The transfer transistor M3L1' functions as a transfer unit that performs an operation of transferring the electric charge held by the charge holding unit MEM_L2' to the floating diffusion unit FD_L when it is turned on. The transfer transistor M1S1' functions as a transfer unit that performs an operation of transferring the electric charge held by the photoelectric conversion unit PD' to the charge holding unit MEM_S1' when it is turned on.

The transfer transistor M2S1' functions as a transfer unit that performs an operation of transferring the electric charge held by the charge holding unit MEM_S1' to the charge holding unit MEM_S2' when it is turned on. The transfer transistor M3S1' functions as a transfer unit that performs an operation of transferring the electric charge held by the charge holding unit MEM_S2' to the floating diffusion unit FD_S when it is turned on.

In addition, in Fig. 5, two charge holding units (the charge holding unit MEM_L2 and the charge holding unit MEM_L2') have a common output unit. Also, two other charge holding units (the charge holding unit MEM_S2 and the charge holding unit MEM_S2') have a common output unit and output pixel signals to the vertical output lines.

For example, it is sufficient to have a configuration in which signals based on respective electric charges from the four charge holding units are output to the vertical output lines, and for example, the vertical output lines to which pixel signals are output from the four charge holding units may all be different from each other, or the four charge holding units may have a common output unit.

The charge discharge transistor M7' functions as an overflow drain unit that discharges an excess electric charge in the photoelectric conversion unit PD' in an off state. In addition, it can also be said that the charge discharge transistor M7' functions as a reset unit that performs a reset operation to reset the photoelectric conversion unit PD' to a voltage in accordance with the voltage VDD when it is turned on.

Next, a driving method of the photoelectric conversion device according to the second embodiment will be described with reference to Fig. 6. Fig. 6 is a timing diagram showing an example of a driving method relating to reading of the photoelectric conversion device according to the second embodiment.

Changes over time of the control signal GS_L1, the control signal GS_L2, the control signal GS_S1, the control signal GS_S2, and the control signal OFG, and the vertical synchronous signal VD and the horizontal synchronous signal HD are the same as those in Fig. 3, and thus will be omitted.

However, in the second embodiment, the transfer control caused by the control signal GS_L1, the control signal GS_L2, the control signal GS_S1, and the control signal GS_S2 and the reset control caused by the control signal OFG performed thereafter are performed at the timing of successive horizontal synchronous signals HD.
In addition, both the accumulation period Ts and the accumulation period Tl are controlled to be periods that are longer than two the horizontal synchronous signals HD. That is, the drive control circuit 60 controls so that the batch control signal, which causes noise superimposition, is not performed at an interval of one horizontal synchronous signal HD. That is, the interval of the batch drive control is controlled to be less than a predetermined period. In addition, the interval of the batch drive control is controlled to be at least a predetermined period.

Fig. 6 shows the control signals supplied to the transfer transistor M3L1, the transfer transistor M3L1', the transfer transistor M3S1, the transfer transistor M3S1', the selection transistor M6, the selection transistor M10, the reset transistor M4, and the reset transistor M8.

That is, changes over time of the control signal TX_L1, the control signal TX_L1', the control signal TX_S1, the control signal TX_S1', the control signal SEL_L, the control signal SEL_S, the control signal RES_L, and the control signal RES_S are shown. Here, n is an integer of 1 or more. When each control signal is at a high level, the corresponding transistor is active (on state).

Fig. 6 shows the control signals supplied to the pixels 12 in the n-th row and the control signals supplied to the pixels 12 in the (n+1)-th row, among the control signals corresponding to each of the plurality of rows constituting the pixel unit 10. The control signals supplied to the pixels 12 in the n-th row have (n) added to their reference signs, and the control signals supplied to the pixels 12 in the (n+1)-th row have (n+1) added to their reference signs.

In each frame, signals based on the signal charges accumulated in the charge holding unit MEM_L2, the charge holding unit MEM_L2', the charge holding unit MEM_S2, and the charge holding unit MEM_S2' of the pixels 12 in each row are sequentially read.

At the start time of the N-th frame, the charge holding unit MEM_L2 and the charge holding unit MEM_L2' of each pixel 12 respectively hold the signal charges accumulated during the accumulation period Tlong of the (N-1)-th frame. In addition, the charge holding unit MEM_S2 and the charge holding unit MEM_S2' respectively hold the signal charges accumulated during the accumulation period Tshort of the (N-1)-th frame.

It is assumed that, immediately before time t50, the control signal TX_L1(n), the control signal TX_L1'(n), and the control signal SEL_L(n) are at low level, and the control signal RES_L(n) is at high level.

At time t50, the vertical scanning circuit 20 controls the control signal SEL_L(n) from low level to high level. These results in a selected state in which the pixel signals can be read from the charge holding units MEM_L2 or the charge holding units MEM_L2' of the pixels 12 in each column of the n-th row.

At the subsequent time t51, the vertical scanning circuit 20 controls the control signal RES_L(n) from high level to low level. Thus, the reset transistors M4 are turned off. The voltage of the vertical output lines 16 that are adjusted after the reset transistors M4 are turned off is the reset level voltage VRES_L.

At the subsequent time t52, the vertical scanning circuit 20 controls the control signal TX_L1(n) from low level to high level. Thus, the transfer transistors M3L1 of the pixels 12 in the n-th row are turned on. Then, voltages in accordance with the potentials of the floating diffusion units FD_L are output to the vertical output lines 16.

The voltages of the vertical output lines 16 that are adjusted after the transfer transistors M3L1 are turned off are the signal level voltages VSIG_L. In this way, the pixel signals |VSIG_L-VRES_L|, which are the physical quantities in accordance with the amounts of signal charge held in the charge holding units MEM_L2 of the n-th row in the n-th frame, are obtained.

At the subsequent time t53, the vertical scanning circuit 20 controls the control signal RES_L(n) from low level to high level. Thus, the floating diffusion units FD_L of the pixels 12 in the n-th row are reset to the potential in accordance with the voltage VDD.

At the subsequent time t54, the vertical scanning circuit 20 controls the control signal RES_L(n) from high level to low level. The voltage of the vertical output lines 16 that are adjusted after the reset transistors M4 are turned off is the reset level voltage VRES_L'.

At the subsequent time t55, the vertical scanning circuit 20 controls the control signal TX_L1'(n) from low level to high level. Thus, the signal charges held in the n-th row charge holding units MEM_L2' are transferred to the floating diffusion units FD_L.

Then, the floating diffusion units FD_L become the potentials in accordance with the amounts of signal charge transferred from the charge holding units MEM_L2', and the voltages in accordance with the potentials of the floating diffusion units FD_L are output to the vertical output lines 16.

Next, the voltages of the vertical output lines 16 that are adjusted after the transfer transistors M3L1' are turned off are signal level voltages VSIG_L'. In this way, pixel signals |VSIG_L'-VRES_L'|, which are physical quantities in accordance with the amounts of signal charge held in the charge holding units MEM_L2', are obtained.

By the subsequent time t56, the vertical scanning circuit 20 controls the control signal RES_L(n) from low level to high level, and at time t56, controls the control signal SEL_L(n) from high level to low level. Thus, the n-th row is deselected.

Here, the operation of reading the pixel signals from the charge holding unit MEM_L2 and the charge holding unit MEM_L2' described during the period from time t50 to time t56 functions as the first read operation to read the pixel signal in accordance with the amount of electric charge accumulated in the first exposure period.

The first read operation from the charge holding unit MEM_L2 and the first read operation from the charge holding unit MEM_L2' described above are each started on the basis of the falling edge of the horizontal synchronous signal HD and completed by the falling edge of the next horizontal synchronous signal HD.

Also, from time t57 to time t58, in the same manner as from time t50 to time t56, the pixel signal |VSIG_S-VRES_S| and the pixel signal |VSIG_S'-VRES_S'| are respectively read from the charge holding unit MEM_S2 and the charge holding unit MEM_S2' of the pixel 12 in the (n)-th row.

These operations function as the second read operation to read the pixel signal in accordance with the amount of electric charge accumulated in the second exposure period.
Also, from time t59 to time t60, in the same manner as from time t50 to time t56, the first read operation is performed from the charge holding units MEM_L2 and the charge holding units MEM_L2' of the pixels 12 in the (n+1)-th row.

In addition, during the period from time t61 to time t62, the second read operation is performed from the charge holding units MEM_S2 and the charge holding units MEM_S2' of the pixels 12 in the (n+1)-th row. The same applies to read operations of the pixels 12 in the other rows.

In the second embodiment, the pixel signals based on the electric charges generated in the photoelectric conversion units PD and the pixel signals based on the electric charges generated in the photoelectric conversion units PD' are read as independent pixel signals, but they may be added and read in the floating diffusion units FD.

Here, in the photoelectric conversion units PD and the photoelectric conversion units PD' of the pixels 12 in the n-th row, the pixel signals obtained in the first read are Plong[n,y] and Plong'[n,y], and the pixel signals obtained in the second read are Pshort[n,y] and Pshort'[n,y].

When Plong'[n,y] is read at the timing of the horizontal synchronous signal HD(2m), the noise caused by the batch control signal is superimposed on Plong'[n,y] and Pshort[n,y].

In the second embodiment, the read timing is controlled so that the noise caused by the batch control signal is not superimposed on both the pixel signals read from the charge holding units MEM_L2 and the pixel signals read from the charge holding units MEM_S2. Alternatively, the read timing is controlled so that the noise is not superimposed on both the pixel signal read from the charge holding unit MEM_L2' and the pixel signal read from the charge holding unit MEM_S2'.

For that reason, no noise caused by the batch control signal is superimposed on Plong[n,y] and Pshort'[n,y]. That is, Plong'[n,y] and Pshort[n,y] can be corrected using Plong[n,y] or Pshort'[n,y].

In this way, according to the second embodiment, it is possible to acquire a video image in which image quality degradation caused by the global electronic shutter operation is corrected.

### <Third Embodiment>

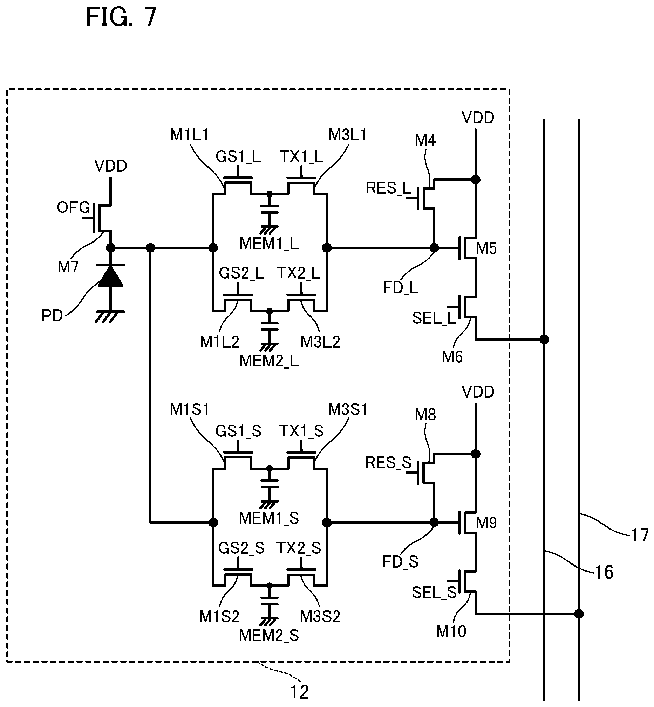

A photoelectric conversion device according to a third embodiment of the present disclosure and a driving method thereof will be described with reference to Figs. 7 to 9. Fig. 7 is an equivalent circuit diagram showing a configuration example of each pixel of the photoelectric conversion device according to the third embodiment of the present disclosure. In addition, in the following description, the same configurations and processes as those already described will be denoted by the same reference signs, and detailed description thereof will be omitted.

The third embodiment differs from the first embodiment in that two charge holding units are connected in parallel between the photoelectric conversion unit PD and each of the two floating diffusion units FD. That is, in the third embodiment, four charge holding units can be connected in parallel to the photoelectric conversion unit.

As shown in Fig. 7, each pixel 12 has the photoelectric conversion unit PD, the transfer transistor M1L1, a transfer transistor M1L2, the transfer transistor M1S1, and a transfer transistor M1S2. Also, each pixel 12 has the transfer transistor M3L1, a transfer transistor M3L2, the transfer transistor M3S1, and a transfer transistor M3S2.

In addition, each pixel 12 further has the reset transistor M4, the reset transistor M8, the amplification transistor M5, the amplification transistor M9, the selection transistor M6, the selection transistor M10, and the charge discharge transistor M7.

The drain of the transfer transistor M1L1 is connected to the source of the transfer transistor M3L1. A connection node between the drain of the transfer transistor M1L1 and the source of the transfer transistor M3L1 includes a capacitive component and functions as a charge holding unit (charge holding unit MEM1_L).

A drain of the transfer transistor M1L2 is connected to a source of the transfer transistor M3L2. A connection node between the drain of the transfer transistor M1L2 and the source of the transfer transistor M3L2 includes a capacitive component and functions as a charge holding unit (charge holding unit MEM2_L).

The drain of the transfer transistor M1S1 is connected to the source of the transfer transistor M3S1. A connection node between the drain of the transfer transistor M1S1 and the source of the transfer transistor M3S1 includes a capacitive component and functions as a charge holding unit (charge holding unit MEM1_S).

A drain of the transfer transistor M1S2 is connected to a source of the transfer transistor M3S2. A connection node between the drain of the transfer transistor M1S2 and the source of the transfer transistor M3S2 includes a capacitive component and functions as a charge holding unit (charge holding unit MEM2_S).

Here, the charge holding unit MEM1_L, the charge holding unit MEM2_L, the charge holding unit MEM1_S, and the charge holding unit MEM2_S function as two or more charge holding units that hold electric charges from the photoelectric conversion unit In addition, the transfer transistor M1L1, the transfer transistor M1L2, the transfer transistor M1S1, and the transfer transistor M1S2 function as transfer units that transfer electric charges from the photoelectric conversion unit to the charge holding units.

The drains of the transfer transistor M3L1 and the transfer transistor M3L2 are connected to the source of the reset transistor M4 and the gate of the amplification transistor M5. A connection node between the drains of the transfer transistor M3L1 and the transfer transistor M3L2, the source of the reset transistor M4, and the gate of the amplification transistor M5 form the floating diffusion unit FD_L.

The drains of the transfer transistor M3S1 and the transfer transistor M3S2 are connected to the source of the reset transistor M8 and the gate of the amplification transistor M9. A connection node between the drains of the transfer transistor M3S1 and the transfer transistor M3S2, the source of the reset transistor M8, and the gate of the amplification transistor M9 form the floating diffusion unit FD_S.

Here, the transfer transistor M3L1, the transfer transistor M3L2, the reset transistor M4, the amplification transistor M5, and the selection transistor M6 function as a read unit that reads signals in accordance with the amounts of electric charge transferred from the charge holding units.

Also, the transfer transistor M3S1, the transfer transistor M3S2, the reset transistor M8, the amplification transistor M9, and the selection transistor M10 function as a read unit that reads signals in accordance with the amounts of electric charge transferred from the charge holding units.

Each of the control lines 14 includes 13 signal lines. Among them, six signal lines are respectively connected to the gates of the transfer transistor M1L1, the transfer transistor M1L2, the transfer transistor M1S1, the transfer transistor M1S2, the transfer transistor M3L1, and the transfer transistor M3L2.

Also, the remaining seven signal lines are connected to the gates of the transfer transistor M3S1, the transfer transistor M3S2, the reset transistor M4, the reset transistor M8, the selection transistor M6, the selection transistor M10 and the charge discharge transistor M7.

A control signal GS1_L is supplied from the vertical scanning circuit 20 to the signal line connected to the gate of the transfer transistor M1L1. A control signal GS2_L is supplied from the vertical scanning circuit 20 to the signal line connected to the gate of the transfer transistor M1L2.

A control signal TX1_L is supplied from the vertical scanning circuit 20 to the signal line connected to the gate of the transfer transistor M3L1. A control signal TX2_L is supplied from the vertical scanning circuit 20 to the signal line connected to the gate of the transfer transistor M3L2.

A control signal GS1_S is supplied from the vertical scanning circuit 20 to the signal line connected to the gate of the transfer transistor M1S1. A control signal GS2_S is supplied from the vertical scanning circuit 20 to the signal line connected to the gate of the transfer transistor M1S2.

A control signal TX1_S is supplied from the vertical scanning circuit 20 to the signal line connected to the gate of the transfer transistor M3S1. A control signal TX2_S is supplied from the vertical scanning circuit 20 to the signal line connected to the gate of the transfer transistor M3S2.

The transfer transistor M1L1 functions as a transfer unit that performs an operation of transferring the electric charge held by the photoelectric conversion unit PD to the charge holding unit MEM1_L when it is turned on. The transfer transistor M1L2 functions as a transfer unit that performs an operation of transferring the electric charge held by the photoelectric conversion unit PD to the charge holding unit MEM2_L when it is turned on.

The transfer transistor M1S1 functions as a transfer unit that performs an operation of transferring the electric charge held by the photoelectric conversion unit PD to the charge holding unit MEM1_S when it is turned on. The transfer transistor M1S2 functions as a transfer unit that performs an operation of transferring the electric charge held by the photoelectric conversion unit PD to the charge holding unit MEM2_S when it is turned on.

The transfer transistor M3L1 functions as a transfer unit that performs an operation of transferring the electric charge held by the charge holding unit MEM1_L to the floating diffusion unit FD_L when it is turned on. The transfer transistor M3L2 functions as a transfer unit that performs an operation of transferring the electric charge held by the charge holding unit MEM2_L to the floating diffusion unit FD_L when it is turned on.

The transfer transistor M3S1 functions as a transfer unit that performs an operation of transferring the electric charge held by the charge holding unit MEM1_S to the floating diffusion unit FD_S when it is turned on. The transfer transistor M3S2 functions as a transfer unit that performs an operation of transferring the electric charge held by the charge holding unit MEM2_S to the floating diffusion unit FD_S when it is turned on.

Also, Fig. 7 shows a configuration in which two charge holding units (the charge holding unit MEM1_L and the charge holding unit MEM2_L) have a common output unit, and two other charge holding units (the charge holding unit MEM1_S and the charge holding unit MEM2_S) have a common output unit.

However, it is sufficient to have a configuration in which signals based on respective electric charges from the four charge holding units are output to the vertical output lines independently, and for example, the four charge holding units may have different output units respectively, or the four charge holding units may have a common output unit.

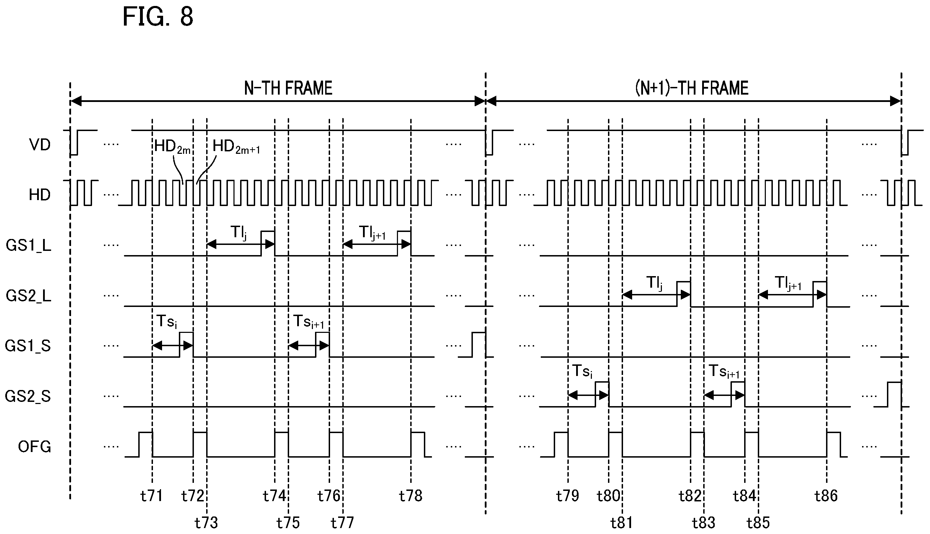

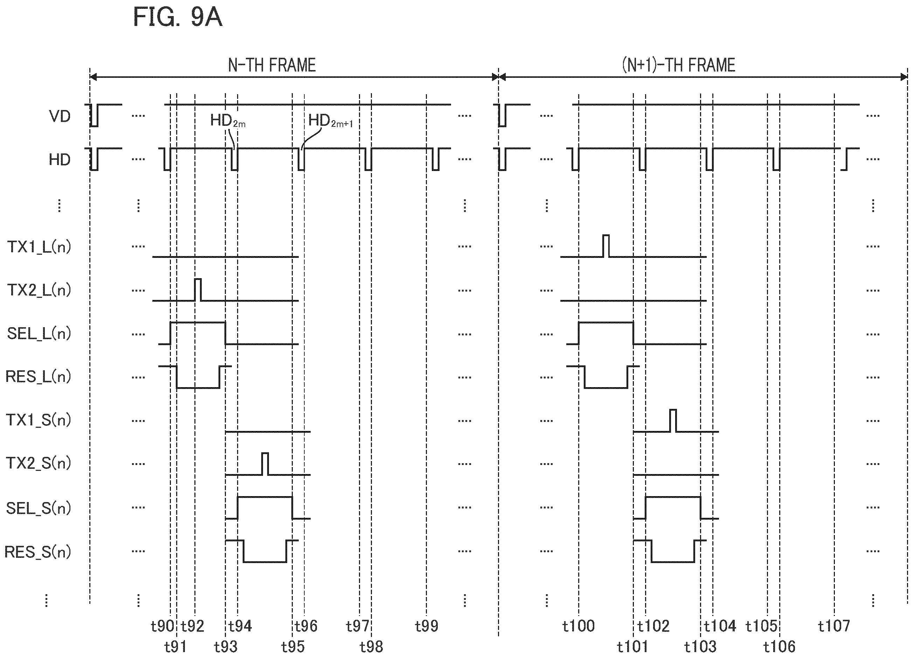

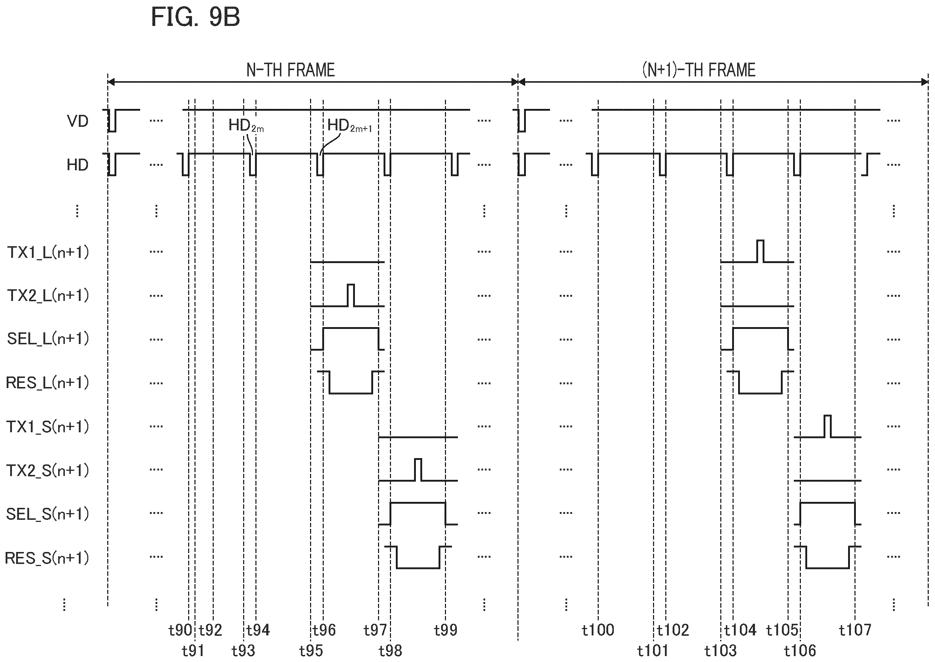

Next, a driving method of the photoelectric conversion device according to the third embodiment will be described with reference to Figs. 8 and 9.

Fig. 8 is a timing diagram showing an example of a basic driving method relating to an exposure period of the photoelectric conversion device according to the third embodiment of the present disclosure. Fig. 8 shows an example of changes over time of the control signal GS1_L and the control signal GS2_L respectively supplied to the transfer transistor M1L1 and the transfer transistor M1L2 in the N-th frame and the (N+1)-th frame.

Also, Fig. 8 shows an example of changes over time of the control signal GS1_S, the control signal GS2_S, and the control signal OFG supplied to the transfer transistor M1S1, the transfer transistor M1S2, and the charge discharge transistor M7, and the vertical synchronous signal VD and the horizontal synchronous signal HD.

In the third embodiment, the falling edge of the vertical synchronous signal VD is the frame start timing, and each control signal is controlled on the basis of the falling edge of the horizontal synchronous signal HD. In the third embodiment, in each frame, a plurality of (Ks times) accumulation periods Ts and a plurality of (Kl times) accumulation periods Tl are executed.

In the N-th frame of Fig. 8, the accumulation period Ts is a period for accumulating a signal charge in the charge holding unit MEM1_S, and the accumulation period Tl is a period for accumulating a signal charge in the charge holding unit MEM1_L.

Also, in the (N+1)-th frame of Fig. 8, the accumulation period Ts is a period for accumulating a signal charge in the charge holding unit MEM2_S, and the accumulation period Tl is a period for accumulating a signal charge in the charge holding unit MEM2_L.

Operations during the i-th accumulation period Tsi and the (i+1)-th accumulation period Tsi+1 among the Ks times, and operations during the j-th accumulation period Tlj and the (j+1)-th accumulation period Tlj+1 among the Kl times will be described below with reference to Fig. 8.

In the N-th frame, immediately before time t71, the vertical scanning circuit 20 controls the control signal OFG from low level to high level. At the subsequent time t71, the vertical scanning circuit 20 controls the control signal OFG from high level to low level. Thus, the charge discharge transistor M7 is turned off, and the reset state of the photoelectric conversion unit PD is released.

At the horizontal synchronous signal HD immediately before the subsequent time t72, the vertical scanning circuit 20 controls the control signal GS1_S from low level to high level. Thus, the transfer transistor M1S1 is turned on, and the signal charge accumulated in the photoelectric conversion unit PD is transferred to the charge holding unit MEM1_S.

At the subsequent time t72, the transfer transistor M1S1 is turned off. That is, the period from time t71 to time t72 is the signal charge accumulation period Tsi in the N-th frame. At time t72, the vertical scanning circuit 20 controls the control signal OFG from low level to high level. Thus, the charge discharge transistor M7 is turned on, and the photoelectric conversion unit PD is reset to the potential in accordance with the voltage VDD.

At the subsequent time t73, the vertical scanning circuit 20 controls the control signal OFG from high level to low level. Thus, the charge discharge transistor M7 is turned off, and the reset state of the photoelectric conversion unit PD is released.

At the horizontal synchronous signal HD immediately before the subsequent time t74, the vertical scanning circuit 20 controls the control signal GS1_L from low level to high level. Thus, the transfer transistor M1L1 is turned on, and the signal charge accumulated in the photoelectric conversion unit PD is transferred to the charge holding unit MEM1_L.

At the subsequent time t74, the transfer transistor M1L1 is turned off. That is, the period from time t73 to time t74 is the signal charge accumulation period Tlj in the N-th frame. At time t74, the vertical scanning circuit 20 controls the control signal OFG from low level to high level. Thus, the charge discharge transistor M7 is turned on, and the photoelectric conversion unit PD is reset to the potential in accordance with the voltage VDD.

After this, the accumulation period Ts and accumulation period Tl are repeated a predetermined number of times in the same manner as the driving of the period from time t71 to time t72 or from time t73 to time t74. For example, as shown in Fig. 8, the signal charge accumulation period Tsi+1 is performed during the period from time t75 to time t76, and the signal charge accumulation period Tlj+1 is performed during the period from time t77 to time t78.

In this way, Ks accumulation periods Ts and Kl accumulation periods Tl are performed in the N-th frame. Thus, the charge holding unit MEM1_S holds the signal charge generated by the photoelectric conversion unit PD during the accumulation period Tshort, which is the sum of lengths of the Ks periods from the accumulation period Ts1 to the accumulation period TsKs.

Also, the charge holding unit MEM1_L holds the signal charge generated by the photoelectric conversion unit PD during the accumulation period Tlong, which is the sum of lengths of the Kl periods from the accumulation period Tl1 to the accumulation period TlKl.

In the subsequent (N+1)-th frame, immediately before time t79, the vertical scanning circuit 20 controls the control signal OFG from low level to high level. At the subsequent time t79, the vertical scanning circuit 20 controls the control signal OFG from high level to low level. Thus, the charge discharge transistor M7 is turned off, and the reset state of the photoelectric conversion unit PD is released.

At the horizontal synchronous signal HD immediately before the subsequent time t80, the vertical scanning circuit 20 controls the control signal GS2_S from low level to high level. Thus, the transfer transistor M1S2 is turned on, and the signal charge accumulated in the photoelectric conversion unit PD is transferred to the charge holding unit MEM2_S.

At the subsequent time t80, the transfer transistor M1S2 is turned off. That is, the period from time t79 to time t80 is the signal charge accumulation period Tsi in the (N+1)-th frame. At time t80, the vertical scanning circuit 20 controls the control signal OFG from low level to high level. Thus, the charge discharge transistor M7 is turned on, and the photoelectric conversion unit PD is reset to the potential in accordance with the voltage VDD.

At the subsequent time t81, the vertical scanning circuit 20 controls the control signal OFG from high level to low level. Thus, the charge discharge transistor M7 is turned off, and the reset state of the photoelectric conversion unit PD is released.

At the horizontal synchronous signal HD immediately before the subsequent time t82, the vertical scanning circuit 20 controls the control signal GS2_L from low level to high level. Thus, the transfer transistor M1L2 is turned on, and the signal charge accumulated in the photoelectric conversion unit PD is transferred to the charge holding unit MEM2_L.

At the subsequent time t82, the transfer transistor M1L2 is turned off. That is, the period from time t81 to time t82 is the signal charge accumulation period Tlj in the (N+1)-th frame.

After this, the accumulation period Ts and accumulation period Tl are repeated a predetermined number of times in the same manner as the driving of the period from time t79 to time t80 or from time t81 to time t82.

For example, as shown in Fig. 8, the signal charge accumulation period Tsi+1 is performed during the period from time t83 to time t84, and the signal charge accumulation period Tlj+1 is performed during the period from time t85 to time t86.

In this way, the Ks accumulation periods Ts and the Kl accumulation periods Tl are performed in the (N+1)-th frame. Thus, the charge holding unit MEM2_S holds the signal charge generated in the photoelectric conversion unit PD during the accumulation period Tshort. In addition, the charge holding unit MEM2_L holds the signal charge generated in the photoelectric conversion unit PD during the accumulation period Tlong.

Here, the horizontal synchronous signal HD immediately before time t72 is defined as the 2m-th horizontal synchronous signal HD(2m) of the N-th frame, and the horizontal synchronous signal HD at time t72 is defined as the (2m+1)-th horizontal synchronous signal HD(2m+1) of the N-th frame. Here, m is an integer of 1 or more.

Figs. 9A and 9B are timing diagrams showing an example of a driving method relating to reading of the photoelectric conversion device according to the third embodiment of the present disclosure. Fig. 9 shows the control signals supplied to the transfer transistor M3L1, the transfer transistor M3L2, the transfer transistor M3S1, and the transfer transistor M3S2. Further, the control signals supplied to the selection transistor M6, the selection transistor M10, the reset transistor M4, and the reset transistor M8 are shown.

That is, changes over time of the control signal TX1_L, the control signal TX2_L, the control signal TX1_S, the control signal TX2_S, the control signal SEL_L, the control signal SEL_S, the control signal RES_L, and the control signal RES_S are shown.

Figs. 9A and 9B show the control signals supplied to the pixels 12 in the n-th row and the control signals supplied to the pixels 12 in the (n+1)-th row, among the control signals corresponding to each of the plurality of rows constituting the pixel unit 10. The control signals supplied to the pixels 12 in the n-th row have (n) added to their reference signs, and the control signals supplied to the pixels 12 in the (n+1)-th row have (n+1) added to their reference signs.

In the N-th frame shown in Figs. 9A and 9B, signals based on the signal charges accumulated in the charge holding units MEM2_L and the charge holding units MEM2_S of the pixels 12 in each row are sequentially read. At the start time of the N-th frame, the signal charges accumulated during the accumulation period Tshort or the accumulation period Tlong of the (N-1)-th frame are held in the charge holding unit MEM2_L and the charge holding unit MEM2_S of each pixel 12.

In addition, in the (N+1)-th frame shown in Figs. 9A and 9B, signals based on the signal charges accumulated in the charge holding units MEM1_L and charge holding units MEM1_S of the pixels 12 in each row are sequentially read. At the start time of the (N+1)-th frame, the signal charges accumulated during the accumulation period Tshort or the accumulation period Tlong of the N-th frame are held in the charge holding unit MEM1_L and the charge holding unit MEM1_S of each pixel 12.

Immediately before time t90, the control signal TX1_L(n), the control signal TX2_L(n), and the control signal SEL_L(n) are at low level, and the control signal RES_L(n) is at high level.

At time t90, the vertical scanning circuit 20 controls the control signal SEL_L(n) from low level to high level. These results in a state in which the pixel signals can be read from the charge holding unit MEM1_L or the charge holding unit MEM2_L of the pixels 12 in each column of the n-th row.

At the subsequent time t91, the vertical scanning circuit 20 controls the control signal RES_L(n) from high level to low level. Thus, the reset transistors M4 are turned off. The voltage of the vertical output lines 16 that are adjusted after the reset transistors M4 are turned off is the reset level voltage VRES_L.

At the subsequent time t92, the vertical scanning circuit 20 controls the control signal TX2_L(n) from low level to high level. Thus, the transfer transistors M3L2 of the pixels 12 in the n-th row are turned on, and the signal charges held in the charge holding units MEM2_L are transferred to the floating diffusion units FD_L.

Then, the voltages in accordance with the potentials of the floating diffusion units FD_L are output to the vertical output lines 16. The voltages of the vertical output lines 16 that are adjusted after the transfer transistors M3L2 are turned off are the signal level voltages VSIG_L. In this way, the pixel signals |VSIG_L-VRES_L|, which are the physical quantities in accordance with the amounts of signal charge held in the charge holding units MEM2_L of the n-th row in the n-th frame, are obtained.

Between the time when the transfer transistors M3L2 are turned off and time t93, the vertical scanning circuit 20 controls the control signal RES_L(n) from low level to high level. Thus, the floating diffusion units FD_L of the pixels 12 in the n-th row are reset to the potential in accordance with the voltage VDD. At time t93, the vertical scanning circuit 20 controls the control signal SEL_L(n) from high level to low level. Thus, the pixels 12 in the n-th row are deselected.

Here, the operation of reading the pixel signals from the charge holding units MEM2_L described during the period from time t90 to time t93 functions as the first read operation to read the pixel signals in accordance with the amounts of electric charge accumulated in the first exposure period.

Immediately before the subsequent time t94, the control signal TX1_S(n), the control signal TX2_S(n), and the control signal SEL_S(n) are at low level, and the control signal RES_S(n) is at high level.

At time t94, the vertical scanning circuit 20 controls the control signal SEL_S(n) from low level to high level. These results in a selected state in which the pixel signals can be read from the charge holding units MEM1_S or the charge holding units MEM2_S of the pixels 12 in the n-th row.

During the period from time t94 to the subsequent time t95, in the same manner as during the period from time t90 to time t93, the pixel signals |VSIG_S-VRES_S| are read from the charge holding units MEM2_S of the n-th row in the N-th frame. These operations function as the second read operation to read the pixel signals in accordance with the amounts of charge accumulated in the second exposure period.

During the period from time t96 to the subsequent time t97, in the same manner as during the period from time t90 to time t93, the pixel signals |VSIG_L-VRES_L| are read from the charge holding units MEM2_L of the (n+1)-th row in the N-th frame. These operations function as the first read operation to read the pixel signals in accordance with the amounts of electric charge accumulated in the first exposure period.

During the period from time t98 to time t99, in the same manner as during the period from time t94 to time t95, the pixel signals |VSIG_S-VRES_S| are read from the charge holding units MEM2_S of the (n+1)-th row in the N-th frame. These operations function as the second read operation to read the pixel signals in accordance with the amounts of electric charge accumulated in the second exposure period. The same applies to read operations of the pixels 12 in the other rows.

During the period from time t100 to the subsequent time t101, in the same manner as during the period from time t90 to time t93, the pixel signals |VSIG_L-VRES_L| are read from the charge holding units MEM1_L of the n-th row in the (N+1)-th frame. These operations function as the first read operation to read the pixel signals in accordance with the amounts of electric charge accumulated in the first exposure period.

During the period from time t102 to time t103, in the same manner as during the period from time t94 to time t95, the pixel signals |VSIG_S-VRES_S| are read from the charge holding units MEM1_S of the n-th row in the (N+1)-th frame. These operations function as the second read operation to read the pixel signals in accordance with the amounts of electric charge accumulated in the second exposure period.

During the period from time t104 to time t105, in the same manner as during the period from time t96 to time t97, the pixel signals |VSIG_L-VRES_L| are read from the charge holding units MEM1_L of the (n+1)-th row in the (N+1)-th frame. These operations function as the first read operation to read the pixel signals in accordance with the amounts of electric charge accumulated in the first exposure period.

During the period from time t106 to time t107, in the same manner as during the period from time t98 to time t99, the pixel signals |VSIG_S-VRES_S| are read from the charge holding units MEM1_S of the (n+1)-th row in the (N+1)-th frame. These operations function as the second read operation to read the pixel signals in accordance with the amounts of electric charge accumulated in the second exposure period. The same applies to read operations of the pixels 12 in the other rows.

As described above, in the third embodiment, the driving is performed by a GS method, and thus driving related to the exposure operation, that is, the transfer drive and the reset drive, are performed collectively for the pixels 12 in all rows. In the third embodiment, the control signal GS1_L, the control signal GS2_L, the control signal GS1_S, and the control signal GS2_S in Fig. 8 correspond to the batch transfer drive control, and the control signal OFG corresponds to the batch reset drive control.

In the third embodiment, the read timing is controlled so that the first read operation of the pixels 12 is performed at the timing of the odd-numbered horizontal synchronous signals HD in the frame, and the second read operation of the pixels 12 is performed at the timing of the even-numbered horizontal synchronous signals HD in the frame.

That is, the read timing is controlled so that the horizontal synchronous signal HD(2m) occurs immediately before time t94, which is the timing to start the second read operation of the n-th row in the n-th frame. Also, the read timing is controlled so that the horizontal synchronous signal HD(2m+1) occurs immediately before time t96, which is the timing to start the first read operation of the (n+1)-th row. The same applies to the (N+1)-th frame.

According to the third embodiment, the same correction as that described in the first embodiment can be made, and it is possible to acquire a video image in which image quality degradation caused by the global electronic shutter operation is corrected.

### <Fourth Embodiment>

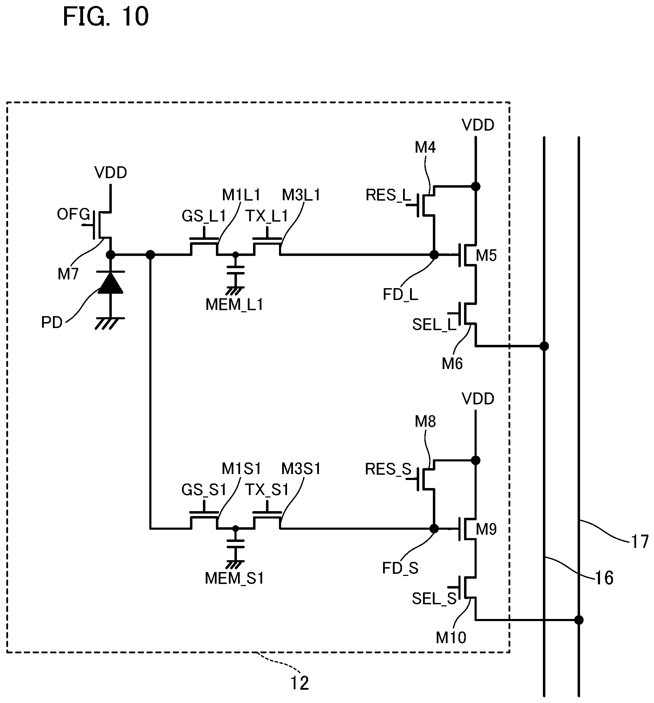

A photoelectric conversion device according to a fourth embodiment of the present disclosure and a driving method thereof will be described with reference to Figs. 10 to 12. Also, in the following description, the same configurations and processes as those already described will be denoted by the same reference signs, and detailed description thereof will be omitted. In addition, the fourth embodiment differs from the first embodiment in that two charge holding units are connected in parallel between the photoelectric conversion unit PD and each of the two floating diffusion units FD.

Fig. 10 is an equivalent circuit diagram showing a configuration example of each pixel of the photoelectric conversion device according to the fourth embodiment of the present disclosure. As shown in Fig. 10, each pixel 12 has the photoelectric conversion unit PD, the transfer transistor M1L1, the transfer transistor M1S1, the transfer transistor M3L1, and the transfer transistor M3S1.

Also, each pixel 12 further has the reset transistor M4, the reset transistor M8, the amplification transistor M5, the amplification transistor M9, the selection transistor M6, the selection transistor M10, and the charge discharge transistor M7. Here, the charge discharge transistor M7 functions as a charge discharge unit that discharges the electric charge accumulated in the photoelectric conversion unit.

The anode of the photoelectric conversion unit PD is connected to the ground node, and the cathode is connected to the source of the transfer transistor M1L1, the source of the transfer transistor M1S1, and the source of the charge discharge transistor M7.

The drain of the transfer transistor M1L1 is connected to the source of the transfer transistor M3L1. A connection node between the drain of the transfer transistor M1L1 and the source of the transfer transistor M3L1 includes a capacitive component and functions as a charge holding unit (charge holding unit MEM_L1).

The drain of the transfer transistor M1S1 is connected to the source of the transfer transistor M3S1. A connection node between the drain of the transfer transistor M1S1 and the source of the transfer transistor M3S1 includes a capacitive component and functions as a charge holding unit (charge holding unit MEM_S1).

Here, the charge holding unit MEM_L1 and the charge holding unit MEM_S1 function as the first charge holding unit and the second charge holding unit that hold the electric charges from the photoelectric conversion unit. In addition, the transfer transistor M1L1 and the transfer transistor M1S1 function as the transfer units that transfer the electric charges from the photoelectric conversion unit to the charge holding units.

The transfer transistor M3L1, the reset transistor M4, the amplification transistor M5, and the selection transistor M6, and the transfer transistor M3S1, the reset transistor M8, the amplification transistor M9, and the selection transistor M10 function as the read units. Also, the read units read the signals in accordance with the amounts of electric charge transferred from the charge holding units.

Each of the control lines 14 includes nine signal lines. Among them, five signal lines are respectively connected to the gates of the transfer transistor M1L1, the transfer transistor M1S1, the transfer transistor M3L1, the transfer transistor M3S1, and the transfer transistor reset transistor M4. Also, the remaining four signal lines are connected to the gates of the reset transistor M8, the selection transistor M6, the selection transistor M10, and the charge discharge transistor M7.

The transfer transistor M3L1 functions as a transfer unit that performs an operation of transferring the electric charge held by the charge holding unit MEM_L1 to the floating diffusion unit FD_L when it is turned on. The transfer transistor M3S1 functions as a transfer unit that performs an operation of transferring the electric charge held by the charge holding unit MEM_S1 to the floating diffusion unit FD_S when it is turned on.

Also, Fig. 10 shows a configuration in which two charge holding units (the charge holding unit MEM_L1 and the charge holding unit MEM_S1) have different transfer units and output units. However, it is sufficient to have a configuration in which signals based on the respective electric charges are output to the vertical output lines independently from the two charge holding units, and for example, the two charge holding units may have a common output unit.

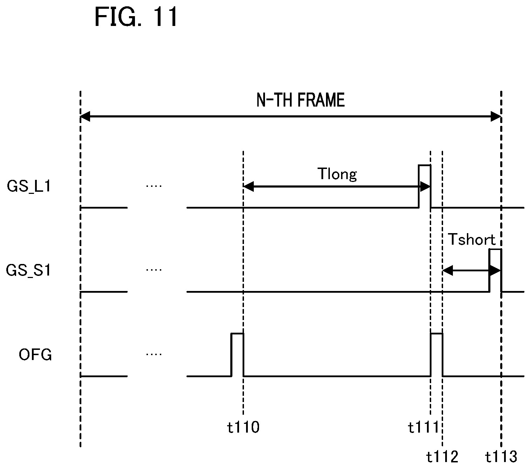

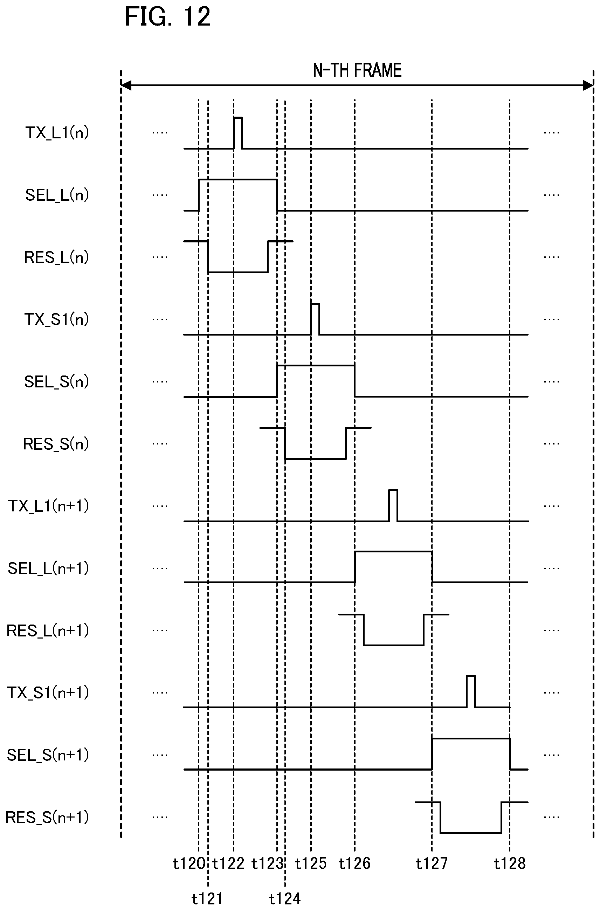

Next, a driving method of the photoelectric conversion device according to the fourth embodiment will be described with reference to Figs. 11 and 12.

Fig. 11 is a timing diagram showing an example of a basic driving method relating to an exposure period of the photoelectric conversion device according to the fourth embodiment of the present disclosure. Fig. 11 shows an example of changes over time of the control signal GS_L1, the control signal GS_S1, and the control signal OFG supplied to the transfer transistor M1L1, the transfer transistor M1S1, and the charge discharge transistor M7 in the Nth frame.

In the fourth embodiment, the accumulation period Tlong and the accumulation period Tshort are each performed once in each frame. The accumulation period Tlong is the period for accumulating signal charge in the charge holding unit MEM_L1, and the accumulation period Tshort is the period for accumulating signal charge in the charge holding unit MEM_S1. Operations of the accumulation period Tlong and the accumulation period Tshort will be described below with reference to Fig. 11.

Immediately before time t110, the control signal OFG is assumed to be at high level. At time t110, the vertical scanning circuit 20 controls the control signal OFG from high level to low level. That is, time t110 is the start time of the accumulation period Tlong in the photoelectric conversion unit PD.

During the period from a predetermined timing after time t110 to time t111, the vertical scanning circuit 20 controls the control signal GS_L1 to a high level. This turns on the transfer transistor M1L1, and the signal charge accumulated in the photoelectric conversion unit PD is transferred to the charge holding unit MEM_L1. The time t111 when the transfer transistor M1L1 is turned off is the end time of the accumulation period Tlong in the photoelectric conversion unit PD.

After time t111, the vertical scanning circuit 20 controls the control signal OFG from low level to high level. At the subsequent time t112, the vertical scanning circuit 20 controls the control signal OFG from high level to low level. That is, time t112 is the start time of the accumulation period Tshort in the photoelectric conversion unit PD.

During the period from a predetermined timing after time t112 to time t113, the vertical scanning circuit 20 controls the control signal GS_S1 to high level. This turns on the transfer transistor M1S1, and the signal charge accumulated in the photoelectric conversion unit PD is transferred to the charge holding unit MEM_S1. The time t113 when the transfer transistor M1S1 is turned off is the end time of the accumulation period Tshort in the photoelectric conversion unit PD.

In this way, the accumulation period Tlong and the accumulation period Tshort are executed in each frame. Thus, the charge holding unit MEM_L1 holds the signal charge generated by the photoelectric conversion unit PD during the accumulation period Tlong. Also, the charge holding unit MEM_S1 holds the signal charge generated by the photoelectric conversion unit PD during the accumulation period Tshort.

After reading of the pixel signals based on the signal charges of the (N-1)-th frame accumulated in the charge holding unit MEM_L1 and charge holding unit MEM_S1 is completed, the signal charge accumulated in the photoelectric conversion unit PD can be transferred to the charge holding unit MEM_L1 or the charge holding unit MEM_S1.

In the fourth embodiment, it is assumed that the reading of the pixel signals based on the signal charges of the (N-1)-th frame accumulated in the charge holding unit MEM_L1 and the charge holding unit MEM_S1 has been completed by the time when the control signal OFG is controlled to high level immediately before time t110.

Fig. 12 is a timing diagram showing an example of the driving method relating to reading of the photoelectric conversion device according to the fourth embodiment of the present disclosure. Fig. 12 shows the control signals supplied to the transfer transistor M3L1, the transfer transistor M3S1, the selection transistor M6, the selection transistor M10, the reset transistor M4, and the reset transistor M8.

That is, changes over time of the control signal TX_L1, the control signal TX_S1, the control signal SEL_L, the control signal SEL_S, the control signal RES_L, and the control signal RES_S are shown.

Fig. 12 shows the control signals supplied to the pixels 12 in the n-th row and the control signals supplied to the pixels 12 in the (n+1)-th row, among the control signals corresponding to each of the plurality of rows constituting the pixel unit 10.

In each frame, the pixel signals based on the signal charges accumulated in the charge holding units MEM_L1 and the charge holding units MEM_S1 in each row are sequentially read. At the start time of the N-th frame, the charge holding units MEM_L1 and the charge holding units MEM_S1 of each pixel 12 respectively hold the signal charges accumulated during the accumulation period Tlong or the accumulation period Tshort of the (N-1)-th frame.

Immediately before time t120, the control signal TX _L1(n) and the control signal SEL_L(n) are at low level and the control signal RES_L(n) is at high level.

At time t120, the vertical scanning circuit 20 controls the control signal SEL_L(n) from low level to high level. These results in a selected state in which the pixel signals accumulated in the pixels 12 of each column of the n-th row can be read.

At the subsequent time t121, the vertical scanning circuit 20 controls the control signal RES_L(n) from high level to low level. Thus, the reset states of the floating diffusion units FD_L are released. In this way, the reset level voltages VRES_L are read out to the vertical output lines 16.

At the subsequent time t122, the vertical scanning circuit 20 controls the control signal TX_L1(n) from low level to high level. Thus, the transfer transistors M3L1 of the pixels 12 in the n-th row are turned on, and the signal charges held in the charge holding units MEM_L1 are transferred to the floating diffusion units FD_L.

Then, the floating diffusion units FD_L have potentials in accordance with the amounts of signal charge transferred from the charge holding units MEM_L1, and the voltages in accordance with the potentials of the floating diffusion units FD_L are output to the vertical output lines 16.

After time t122, the control signal TX_L1(n) is controlled to low level, and the transfer transistors M3L1 of the pixels 12 in the n-th row are turned off. The voltages of the vertical output lines 16 that are adjusted after the transfer transistors M3L1 are turned off are the signal level voltages VSIG_L. In this way, the signal level voltages VSIG_L of the pixels 12 based on the signal charges held in the charge holding units MEM_L1 are read out to the vertical output lines 16.

Differences between the reset level voltages VRES_L and the signal level voltages VSIG_L thus obtained, that is, |VSIG_L-VRES_L|, are the pixel signals, which are the physical quantities in accordance with the amounts of signal charge held in the charge holding units MEM_L1

During the period from when the transfer transistors M3L1 are turned off to time t123, the vertical scanning circuit 20 controls the control signal RES_L(n) from low level to high level.

At the subsequent time t123, the vertical scanning circuit 20 controls the control signal SEL_L(n) from low level to high level.

Here, the operation of reading the pixel signals from the charge holding units MEM_L1 described during the period from time t120 to time t123 functions as the first read operation.

Immediately before time t123, the control signal TX_S1(n) and the control signal SEL_S(n) are at low level, and the control signal RES_S(n) is at high level.

At time t123, the vertical scanning circuit 20 controls the control signal SEL_S(n) from low level to high level. These results in a selected state in which the pixel signals can be read from the pixels 12 in each column of the n-th row.

At the subsequent time t124, the vertical scanning circuit 20 controls the control signal TX_S1(n) from low level to high level. Thus, the reset states of the floating diffusion units FD_S are released. Thus, the signals in accordance with the reset potentials of the floating diffusion units FD_S are output to the vertical output lines 17.

At the subsequent time t125, the vertical scanning circuit 20 controls the control signal TX_S1(n) from low level to high level. Thus, the transfer transistors M3S1 of the pixels 12 in the n-th row are turned on, and the signal charges held in the charge holding units MEM_S1 are transferred to the floating diffusion units FD_S.

Then, the floating diffusion units FD_S have potentials in accordance with the amounts of signal charge transferred from the charge holding units MEM_S1, and the voltages in accordance with the potentials of the floating diffusion units FD_S are output to the vertical output lines 17.

After time t125, the control signal TX_S1(n) is controlled to low level, and the transfer transistors M3S1 of the pixels 12 in the n-th row are turned off. The voltages of the vertical output lines 17 that are adjusted after the transfer transistors M3S1 are turned off are the signal level voltages VSIG_S. In this way, the signal level voltages VSIG_S of the pixels 12 based on the signal charges held in the charge holding units MEM_S1 are read out to the vertical output lines 17.

Differences between the reset level voltages VRES_S and the signal level voltages VSIG_S thus obtained, that is, |VSIG_S-VRES_S|, are the pixel signals, which are the physical quantities in accordance with the amounts of signal charge held in the charge holding units MEM_S1.

During the period from when the transfer transistors M3S1 are turned off to time t126, the vertical scanning circuit 20 controls the control signal RES_S(n) from low level to high level.

At the subsequent time t126, the vertical scanning circuit 20 controls the control signal SEL_S(n) from low level to high level.

Here, the operation of reading the pixel signals from the charge holding units MEM_S1 described during the period from time t123 to time t126 functions as the second read operation.

During the period from time t126 to the subsequent time t127, in the same manner as during the period from time t120 to time t123, the first read operation is performed from the pixels 12 in the (n+1)-th row. Also, during the period from time t128 to time t129, in the same manner as during the period from time t123 to time t126, the second read operation is performed from the pixels 12 in the (n+1)-th row. The same also applies to read operations of the pixels 12 in the other rows.

In the fourth embodiment, the exposure operation during the accumulation period Tshort is performed after the exposure operation during the accumulation period Tlong, but the order may be reversed.

As described above, in the fourth embodiment, the driving is performed by a GS method, and thus driving relating to the exposure operation, that is, the transfer drive and the reset drive, are performed collectively for the pixels 12 in all rows. That is, in the fourth embodiment, the control signal GS_L1 and the control signal GS_S1 in Fig. 11 correspond to the batch transfer drive control, and the control signal OFG corresponds to the batch reset drive control.

Also, the batch drive control for simultaneously driving at least one of the transfer units and the charge discharge units for the plurality of pixels is performed, for example, by the control unit 218, which will be described later.

As described above, in the fourth embodiment, the read operation from each pixel 12 is completed before the control signal GS_L1 is controlled. That is, in the fourth embodiment, the batch drive control signal that causes image quality degradation is only the control signal OFG among the above-described batch drive control signals.

For that reason, as shown in Fig. 12, by performing the first readout operation and the second readout operation from each pixel 12 at different times, it is possible to correct noise caused by the batch drive controls. In this way, according to the fourth embodiment, it is possible to acquire a video image in which image quality degradation caused by the global electronic shutter operation is corrected.

### <Fifth Embodiment>

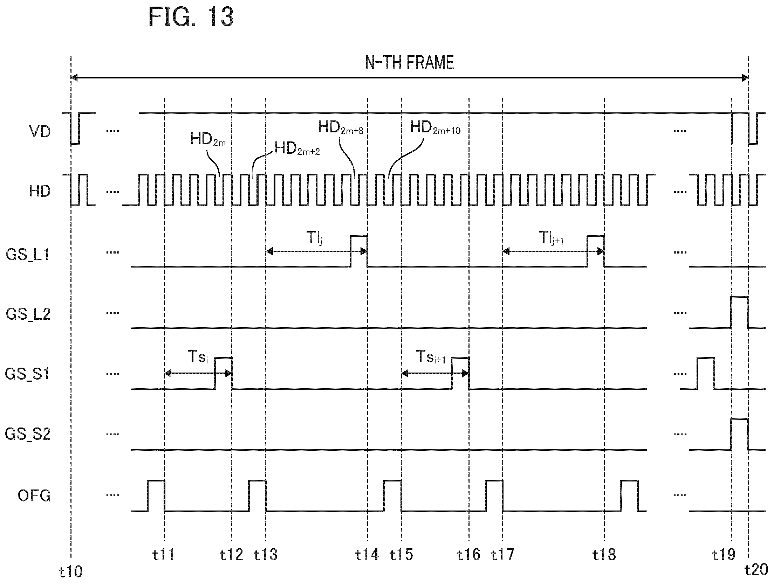

Fig. 13 is a timing diagram showing an example of a basic driving method relating to an exposure time of a photoelectric conversion device according to a fifth embodiment of the present disclosure, and the photoelectric conversion device according to the fifth embodiment and a driving method thereof will be described with reference to Figs. 1, 2, 4, and 13. Also, in the following description, the same configurations and processes as those already described will be denoted by the same reference numerals, and detailed description thereof will be omitted.

The fifth embodiment differs from the first embodiment in that the output circuit 50 does not have a correction processing unit for image quality degradation caused by potential fluctuations associated with a GS operation, but has a signal processing unit for performing HDR synthesis processing. In addition, the fifth embodiment also differs from the first embodiment in that the drive control circuit 60 controls the batch drive control timing so that noise associated with the batch drive control is superimposed only on the pixel signals based on the accumulation period Tshort.

A schematic configuration example of the photoelectric conversion device according to the fifth embodiment of the present disclosure is shown in Fig. 1, as in the first embodiment. Also, a configuration example of each pixel of the photoelectric conversion device according to the fifth embodiment of the present disclosure is shown in Fig. 2, as in the first embodiment.

Next, a driving method of the photoelectric conversion device according to the fifth embodiment of the present disclosure will be described with reference to Fig. 13.

Fig. 13 shows an example of the control signal GS_L1 and the control signal GS_L2 supplied to the transfer transistor M1L1 and the transfer transistor M2L1 in the N-th frame. Also, Fig. 13 shows an example of changes over time of the control signal GS_S1, the control signal GS_S2, and the control signal OFG supplied to the transfer transistor M1S1, the transfer transistor M2S1 and the charge discharge transistor M7, and the vertical synchronous signal VD and the horizontal synchronous signal HD.

In addition, since the accumulation period Tsi, the accumulation period Tlj, the accumulation period Tsi+1, the accumulation period Tlj+1, and time t19 to time t20 given in Fig. 13 are the same as those in the first embodiment, descriptions thereof will be omitted. However, the timing of the accumulation period Ts and the accumulation period Tl in the fifth embodiment is controlled to be even-numbered horizontal synchronous signals HD.

Also, the timing at which the charge discharge transistor M7 is turned on by the control signal OFG after the transfer transistor M1L1 or the transfer transistor M1S1 is turned off is controlled so that it corresponds to one horizontal synchronous signal HD.

In Fig. 13, the noise associated with the control signal GS_S1 during the accumulation period Tsi occurs at the timing of the horizontal synchronous signal HD(2m), and the noise associated with the control signal OFG immediately before the accumulation period Tlj occurs at the timing of the horizontal synchronous signal HD (2m+2).

Similarly, the noise associated with the control signal GS_L1 during the accumulation period Tlj occurs at the timing of the horizontal synchronous signal HD (2m+8), and the noise associated with the control signal OFG immediately before the accumulation period Tsj+1 occurs at the timing of the horizontal synchronous signal HD (2m+10).

Also, in the fifth embodiment, a length of the accumulation period Tlong is controlled to be longer than a length of the accumulation period Tshort. Thus, it is possible to acquire two types of images with different amounts of effective exposure in the same frame, and an HDR image can be obtained by performing HDR synthesis processing in the output circuit 50.

The driving method relating to reading of the photoelectric conversion device according to the fifth embodiment of the present disclosure is shown in Fig. 4, as in the first embodiment. However, the first read operation to read the pixel signals based on the accumulation period Tlong and the second read operation to read the pixel signals based on the accumulation period Tshort are performed alternately at each horizontal synchronous signal HD, and the second read operation is performed at the horizontal synchronous signal HD (2a). Here, a is an integer 1 or more.

As described above, in the fifth embodiment, the noise associated with the batch drive control is superimposed at the timing of the horizontal synchronous signal HD (2a). Also, only the image (short-second image) acquired in the accumulation period Tshort is read out by the horizontal synchronous signal HD (2a).

That is, the noise associated with the batch drive control is superimposed only on the short-second image, and the noise associated with the batch control is not superimposed on the image (long-second image) acquired during the accumulation period Tlong. In the HDR image obtained by HDR synthesis processing of the long-second image and the short-second image obtained in this way, the noise associated with the batch drive control is superimposed only on a high-brightness portion.

Since optical shot noise is dominant in the high-brightness portion, the noise associated with the batch drive control is difficult to see. That is, by controlling the noise associated with the batch drive control to be only in the short-second image, it is possible to acquire a video image in which image quality degradation caused by the noise associated with the batch drive control is inhibited without performing a correction process.

Also, in the fifth embodiment, although the exposure timing is controlled so that the noise associated with the batch control signal is superimposed only on the short-second image, the read timing may also be controlled. For example, if the batch drive control is performed by the horizontal synchronous signal HD(2m+1) shown in Fig. 4, the second read of the n-th row and the first read of (n+1)-th row may be interchanged.

In this way, in the fifth embodiment, accumulation operations during the first exposure period and the second exposure period are performed in one frame period. Also, the first exposure period is longer than the second exposure period, and the second read is controlled to be performed at the same timing as the batch drive control. The two types of images obtained by the above operations are synthesized to obtain the HDR image. Accordingly, it is possible to acquire a video image in which image quality degradation caused by the noise associated with the batch drive control is inhibited.

### <Sixth Embodiment>

An imaging system according to a sixth embodiment of the present disclosure will be described with reference to Fig. 14. Fig. 14 is a functional block diagram showing a schematic configuration example of the imaging system according to the sixth embodiment of the present disclosure.

Some of functional blocks shown in Fig. 14 are realized by causing a CPU or the like serving as a computer (not illustrated) included in the imaging system to execute a computer program stored in a memory (not shown) serving as a storage medium. However, some or all of them may be realized by hardware. For the hardware, a dedicated circuit (ASIC), a processor (a reconfigurable processor or a DSP), or the like may be used.

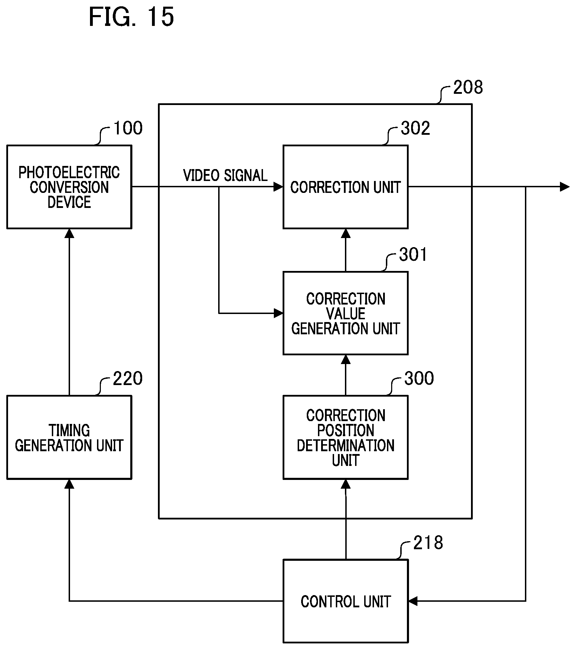

Also, the respective functional blocks shown in Fig. 14 do not have to be built in the same housing, and may be configured by separate devices connected to each other via signal paths. In addition, the foregoing description relating to Fig. 14 similarly applies to Fig. 15 as well.

Further, the photoelectric conversion device 100 described in the first embodiment above can be applied to various imaging systems. Examples of applicable imaging systems include, for example, digital still cameras, digital video cameras, surveillance cameras, copiers, fax machines, cellular phones, vehicle-mounted cameras, and observation satellites.

Also, a camera module including an optical system such as a lens and a photoelectric conversion device is also included in the imaging system. Fig. 14 shows a block diagram of a digital video camera as one example of the imaging system.

An imaging system 200 shown in Fig. 14 has the photoelectric conversion device 100, a lens 202 that forms an optical image of a subject on a light receiving surface of the photoelectric conversion device 100, and an aperture 204 that varies an intensity of radiation of light passing through the lens 202. The lens 202 and the aperture 204 form an optical system that focuses the light on the photoelectric conversion device 100. The photoelectric conversion device 100 is the photoelectric conversion device 100 configured as described in the first to fifth embodiments, and converts the optical image formed by the lens 202 into image data.

The imaging system 200 also has a signal processing unit 208 that processes signals output from the photoelectric conversion device 100. The signal processing unit 208 performs generation of video data from digital signals output by the photoelectric conversion device 100. In addition, the signal processing unit 208 performs various corrections, compression, and the like if needed and outputs image data.

The photoelectric conversion device 100 generates the digital signals that are processed by the signal processing unit 208. An AD conversion unit and the signal processing unit 208 may be formed in a multi-layer on a semiconductor substrate different from the semiconductor layer on which the photoelectric conversion unit of the photoelectric conversion device 100 is formed.

The imaging system 200 further has a memory unit 210 for temporary storing video data, and an external interface unit 212 for communicating with an external computer or the like.

Further, the imaging system 200 has a recording medium 214 such as a semiconductor memory for recording or reading image data, and a recording medium control I/F (interface) unit 216 for recording or reading on the recording medium 214. Also, the recording medium 214 may be built into the imaging system 200 or may be removable.

Furthermore, the imaging system 200 has a control unit 218 that controls various calculations and the entire imaging system 200, and a timing generation unit 220 that outputs various timing signals to the photoelectric conversion device 100 and the signal processing unit 208.

The control unit 218 has a built-in CPU serving as a computer and functions as a control means for controlling operations of each part of the entire imaging system on the basis of a computer program stored in a memory serving as a storage medium.

Also, in the sixth embodiment, the control unit 218 controls exposure settings (accumulation period setting and aperture value setting) in the photoelectric conversion device 100 and the aperture 204 and focus adjustment for the lens 202 on the basis of the results of analyzing video signals obtained in the signal processing unit 208.

Also, timing signals and the like may be input from the outside, and it is sufficient to have a configuration in which the imaging system 200 has at least the photoelectric conversion device 100 and the signal processing unit 208 that processes output signals output from the photoelectric conversion device 100.

The photoelectric conversion device 100 outputs video signals to the signal processing unit 208, and the signal processing unit 208 performs predetermined signal processing on the video signals output from the photoelectric conversion device 100 and outputs video data. In the sixth embodiment, the process in the case of performing correction of image quality degradation associated with the global electronic shutter operation in the signal processing unit 208 will be described with reference to Fig. 15.

Fig. 15 is a functional block diagram showing a detailed configuration example of the signal processing unit of the imaging system according to the sixth embodiment of the present disclosure, which shows a configuration example for performing the correction of image quality degradation associated with the global electronic shutter operation in the signal processing unit 208 shown in Fig. 14.

As described above, the photoelectric conversion device 100 has the configuration as described in the first to fifth embodiments. That is, as a featured drive, two pixel signals with a difference in brightness read at different times are obtained from the photoelectric conversion device 100 when the correction of image quality degradation associated with the global electronic shutter operation is performed.

In the following description, the photoelectric conversion device 100 is assumed to have pixels in v rows and h columns. Also, a pixel signal during the accumulation period Tlong is expressed as Plong[x,y], and a pixel signal during the accumulation period Tshort is expressed as Pshort[x,y]. Here, x and y are integers satisfying 1≤x≤v and 1≤y≤h.

In Fig. 15, the signal processing unit 208 has a correction position determination unit 300, a correction value generation unit 301, and a correction unit 302 as blocks that perform correction of image quality degradation associated with the global electronic shutter operation described in the first to fourth embodiments. Also, In the configuration of the fifth embodiment, this correction process is not performed.

However, other image corrections, signal processing, or the like may be performed before or after the correction of image quality degradation associated with the global electronic shutter operation. Here, the correction unit 302 is for performing the correction process of the noise generated by the global electronic shutter operation using a correction value generated by the correction value generation unit 301.

Also, as described above, the correction unit 302 uses one signal of a first signal read out in the first read operation and a second signal read out in the second read operation to correct the other signal. That is, one of the first signal and the second signal on which the noise generated by the batch drive control is superimposed is corrected by the signal on which the noise is not superimposed.

The correction position determination unit 300 acquires a setting value relating to the exposure period (accumulation period) of the photoelectric conversion device 100 from the exposure settings calculated by the control unit 218, and determines a correction position of the video signal on which the correction process for correcting image quality degradation associated with the global electronic shutter operation is performed.

For example, when the photoelectric conversion device 100 is a photoelectric conversion device 100 having the configuration described in the first embodiment, a video signal read at time t11, which is the timing at which the control signal OFG is controlled to high level, is set to the correction position.

Also, when time t11 is the timing for reading out pixel signals during the accumulation period Tlong of pixels in the Cp-th row, for example, Plong[Cp,k] is set as the correction position on which the noise is superimposed. The correction position (correction row) determined by the correction position determination unit 300 will be referred to as Cp. Cp is an integer of 0 or more.

The correction value generation unit 301 generates a correction value corresponding to the pixel signal Plong[Cp,k] at the correction position. That is, as described in the first embodiment, for example, a correction signal C[Cp,y] for correcting a pixel signal Plong[Cp,y] on which the noise is superimposed is obtained by, for example, C[Cp,y]=Pshort[Cp,y]×(Tlong/Tshort).

Then, this correction signal C[Cp,y] is input to the correction unit 302, and the correction unit 302 performs correction by replacing the pixel signal Plong[Cp,y] on which the noise is superimposed with the correction signal C[Cp,y]. Also, as described in the first to fourth embodiments, a method for generating the correction signal is not limited thereto.

Various embodiments have been described in detail above but it will be understood that the present disclosure is not limited to these embodiments and encompasses all modifications, variants, alternatives and equivalents falling within the scope of the appended claims.

In addition, as a part or the whole of the control according to the embodiments, a computer program realizing the function of the embodiments described above may be supplied to the imaging system or the like through a network or various storage media. Then, a computer (or a CPU, an MPU, or the like) of the imaging system or the like may be configured to read and execute the program. In such a case, the program and the storage medium storing the program configure the present disclosure.

In addition, the present disclosure includes those realized using at least one processor or circuit configured to perform functions of the embodiments explained above. For example, a plurality of processors may be used for distribution processing to perform functions of the embodiments explained above.

This application claims the benefit of Japanese Patent Application No. 2024-099054, filed on June 19, 2024, and Japanese Patent Application No. 2025-62711 filed on April 4, 2025, which are hereby incorporated by reference herein in their entirety..

## Claims

1. An imaging system comprising a plurality of pixels, each pixel including:
a photoelectric conversion unit configured to generate an electric charge by photoelectric conversion;
two or more charge holding units configured to hold the electric charge;
a transfer unit configured to transfer the electric charge from the photoelectric conversion unit to the charge holding units;
a charge discharge unit configured to discharge the electric charge accumulated in the photoelectric conversion unit; and
a read unit configured to read a signal in accordance with an amount of electric charge transferred from the charge holding units, and
a control unit configured to perform batch drive control of simultaneously driving at least one of the transfer units and the charge discharge units for the plurality of pixels, and perform the photoelectric conversion during two or more different exposure periods in one frame period and control one of times for reading signals in accordance with electric charges accumulated in each exposure period not to overlap the timing for the batch drive control.

2. The imaging system according to claim 1, wherein the control unit is configured to perform accumulation operations during a first exposure period and a second exposure period in one frame period, and to control one of a first read operation to read a pixel signal in accordance with an amount of electric charge accumulated during the first exposure period and a second read operation to read a pixel signal in accordance with an amount of electric charge accumulated during the second exposure period to be performed at a timing that does not overlap the timing of the batch drive control.

3. The imaging system according to claim 2, wherein the control unit is configured to control one of the first read operation and the second read operation at the same timing as the batch drive control.

4. The imaging system according to claim 2 or claim 3, wherein the control unit is configured to control the charge discharge unit, the transfer unit, and the read unit to perform one of the first read operation and the second read operation at the same timing as the batch drive control.

5. The imaging system according to any one of claims 2 to 4, wherein the control unit is configured to control the charge discharge unit, the transfer unit, and the read unit to perform one of the first read operation and the second read operation at different timing from the batch drive control.

6. The imaging system according to claim 5, wherein the at least one processor or circuit configured to further function as
a correction unit configured to use one of a first signal read in the first read operation and a second signal read in the second read operation to correct the other signal.

7. The imaging system according to claim 6, wherein the correction unit is configured to correct one of the first signal and the second signal on which noise generated by the batch drive control is superimposed with the other signal on which the noise is not superimposed.

8. The imaging system according to any one of claims 2 to 7, wherein the first exposure period is longer than the second exposure period, and the charge discharge unit, the transfer unit, and the read unit are configured to perform the second read operation at the same timing as the batch drive control.

9. The imaging system according to claim 1, wherein two of the charge holding units are configured to be connectable to the photoelectric conversion unit, and other charge holding units are configured to be connectable in series to each of the two charge holding units.

10. The imaging system according to any one of claims 1 to 9, wherein four charge holding units are configured to be connectable in parallel to the photoelectric conversion unit.

11. The imaging system according to any one of claims 1 to 10, wherein the control unit is configured to control an interval of the batch drive control to be at least a predetermined period.

12. The imaging system according to any one of claims 2 to 11, wherein the control unit is configured to control an interval of the batch drive control to be less than a predetermined period.

13. The imaging system according to any one of claims 1 to 12, wherein the read unit is configured to perform the operation of reading during an exposure operation of the photoelectric conversion unit.

14. An imaging method for controlling an imaging system including a plurality of pixels, each pixel including:
a photoelectric conversion unit configured to generate an electric charge by photoelectric conversion;
two or more charge holding units configured to hold the electric charge;
a transfer unit configured to transfer the electric charge from the photoelectric conversion unit to the charge holding units;
a charge discharge unit configured to discharge the electric charge accumulated in the photoelectric conversion unit; and
a read unit configured to read a signal in accordance with an amount of electric charge transferred from the charge holding units,
wherein the method is configured to perform batch drive control of simultaneously driving at least one of the transfer units and the charge discharge units for the plurality of pixels, and perform the photoelectric conversion during two or more different exposure periods in one frame period and control one of times for reading signals in accordance with electric charges accumulated in each exposure period not to overlap the timing for the batch drive control.

15. A computer program to control an imaging system configured to have
a plurality of pixels, each pixel including:
a photoelectric conversion unit configured to generate an electric charge by photoelectric conversion;
two or more charge holding units configured to hold the electric charge;
a transfer unit configured to transfer the electric charge from the photoelectric conversion unit to the charge holding units;
a charge discharge unit configured to discharge the electric charge accumulated in the photoelectric conversion unit; and
a read unit configured to read a signal in accordance with an amount of electric charge transferred from the charge holding units,
wherein the computer program comprising instructions which, when the program is executed by a computer, cause the computer to carry out following processes of:
performing batch drive control of simultaneously driving at least one of the transfer units and the charge discharge units for the plurality of pixels; and performing the photoelectric conversion during two or more different exposure periods in one frame period and controlling one of times for reading signals in accordance with electric charges accumulated in each exposure period not to overlap the timing for the batch drive control.
